(19) Europäisches Patentamt / European Patent Office / Office européen des brevets

(11) **EP 4 580 292 A1**

(12) **EUROPEAN PATENT APPLICATION**
published in accordance with Art. 153(4) EPC

(43) Date of publication:
**02.07.2025 Bulletin 2025/27**

(21) Application number: **23851700.7**

(22) Date of filing: **04.08.2023**

(51) International Patent Classification (IPC):
**H04W 72/232** (2023.01)

(52) Cooperative Patent Classification (CPC):
**H04W 72/232**

(86) International application number:
**PCT/CN2023/111143**

(87) International publication number:
**WO 2024/032479 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.08.2022 CN 202210940847**
**17.08.2022 CN 202210984926**

(71) Applicant: **SHANGHAI LANGBO COMMUNICATION TECHNOLOGY COMPANY LIMITED**
**Shanghai 200240 (CN)**
(72) Inventors:
• **HU, Yang**
**Shanghai 201206 (CN)**
• **ZHANG, Xiaobo**
**Shanghai 201206 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **METHOD AND APPARATUS USED IN NODE FOR WIRELESS COMMUNICATION**

(57) The present application discloses a method and apparatus used in a node for wireless communication. A first receiver receives a first DCI format; a first transceiver operates a first signal, the first signal occupying at least one PRB bundle in a frequency domain, any PRB bundle occupied by the first signal in the frequency domain belonging to a first sub-band, the first sub-band comprising a plurality of consecutive PRBs, and a first value being equal to the number of PRBs comprised in the first sub-band; wherein the first DCI format comprises a first field; the first field in the first DCI format is used for indicating a frequency domain resource occupied by the first signal, and the size of the first field in the first DCI format is related to the first value; a target PRB bundle is the PRB bundle occupied by the first signal in the frequency domain; and the number of PRBs comprised in the target PRB bundle is related to both the number of PRBs scheduled by the first DCI format and a target threshold.

FIG. 1

**Description**

**Technical Field**

The present application relates to transmission methods and apparatus in wireless communication systems, in particular to transmission methods and apparatus of wireless signals in wireless communication systems that support cellular networks.

**Background Technology**

5G NR supports diverse UE (User Equipment), including conventional UE, UE with high processing capabilities, and UE with reduced capabilities (RedCap UE); achieving support for RedCap UE is an important topic for 5G NR.

**Summary of Invention**

Resource allocation for RedCap UE is an aspect that must be considered. It should be noted that the above description takes the scenario of supporting RedCap UE as an example; the present application is also applicable to other scenarios, such as scenarios that only support conventional UE, scenarios that support UE with high processing capabilities, eMBB (Enhance Mobile Broadband), URLLC (Ultra Reliable and Low Latency Communication), MBS (Multicast Broadcast Services), IoT (Internet of Things), Internet of Vehicles, NTN (non-terrestrial networks), shared spectrum, etc., achieving similar technical effects. In addition, adopting a unified solution in different scenarios (including but not limited to scenarios supporting RedCap UE, scenarios supporting only regular UE, scenarios supporting UE with high processing capabilities, eMBB, URLLC, MBS, IoT, Internet of Vehicles, NTN, and shared spectrum) can also help reduce hardware complexity and cost or improve performance. In the absence of conflict, the embodiments and features in any node of the present application may be applied to any other node. In the absence of conflict, the embodiments of the present application and the features in the embodiments may be combined with each other arbitrarily.

As one embodiment, the interpretation of terminology in the present application is the definition of a specification protocol TS36 series, referring to 3GPP.

As one embodiment, the interpretation of terminology in the present application is the definition of a specification protocol TS38 series, referring to 3GPP.

As one embodiment, the interpretation of terminology in the present application is the definition of a specification protocol TS37 series, referring to 3GPP.

As one embodiment, the interpretation of terminology in the present application refers to the definitions in the specifications protocol of IEEE (Institute of Electrical and Electronics Engineers).

The present application discloses a method used in a first node for wireless communication, comprising:

receiving a first DCI format;
operating a first signal, the first signal occupying at least one PRB bundle in a frequency domain, any PRB bundle occupied by the first signal in the frequency domain belonging to a first sub-band, the first sub-band comprising a plurality of consecutive PRBs, and a first value being equal to the number of PRBs comprised in the first sub-band; wherein the first DCI format comprises a first field, the first field in the first DCI format is used for indicating a frequency domain resource occupied by the first signal, and the size of the first field in the first DCI format is related to the first value; a target PRB bundle is 1 PRB bundle occupied by the first signal in the frequency domain, the target PRB bundle includes at least 1 PRB, the number of PRBs comprised in the target PRB bundle is related to both the number of PRBs scheduled by the first DCI format and a target threshold, and the target threshold is equal to the ratio of a second value to 2; and the second value is related to the capability of the receiver of the first DCI format and the first value is greater than the second value.

As one embodiment, the advantages of the above method include: it is conducive to UE energy conservation.

As one embodiment, the advantages of the above method include: improved transmission performance.

As one embodiment, the advantages of the above method include: improved flexibility in scheduling.

As one embodiment, the advantages of the above method include: optimized resource allocation and improved resource utilization.

As one embodiment, the advantages of the above method include: the trade-off between precoding flexibility and channel estimation is optimized.

As one embodiment, the advantages of the above method include: good compatibility.

As one embodiment, the advantages of the above method include: the changes to the existing 3GPP standards are minor.

According to one aspect of the present application, the method described above is characterized in that, the first sub-band is a BWP.

According to one aspect of the present application, the method described above is characterized in that, when the PRBs scheduled by the first DCI format are consecutive and the number of PRBs scheduled by the first DCI format is greater than the target threshold, the number of PRBs comprised in the target PRB bundle is the same as the scheduled bandwidth; when the PRBs scheduled by the first DCI format are not consecutive or the number of PRBs scheduled by the first DCI format is not greater than the target threshold, the number of PRBs comprised in the target PRB bundle is equal to 2 or 4.

According to one aspect of the present application, the method described above is characterized in that, the first DCI format includes a second field and the second field in the first DCI format is set to 1; the first value set comprises 2 values and the first value set is configurable; a first reference value is one of the 2 values comprised in the first value set and the first reference value is configured to one of 2 or 4; and when the PRBs scheduled by the first DCI format are not consecutive or the number of PRBs scheduled by the first DCI format is not greater than the target threshold, the number of PRBs comprised in the target PRB bundle is equal to the first reference value.

According to one aspect of the present application, the method described above is characterized in that, the first value is used to determine the size of the first field in the first DCI format.

According to one aspect of the present application, the method described above is characterized in that, the first field in the first DCI format includes a first resource indication value, the first resource indication value is related to the first value, and the first resource indication value is used to indicate a frequency domain resource occupied by the first signal;

According to one aspect of the present application, the method described above is characterized in that, the first field in the first DCI format is used to indicate the RBGs allocated to the first signal in the first resource block group set and the total number of RBGs comprised in the first resource block group set is associated with the first value.

According to one aspect of the present application, the method described above is characterized in that, the first node can assume that the same precoding is applied to any of the PRBs in the target PRB bundle.

According to one aspect of the present application, the method described above is characterized in that it includes:

sending a target information block, the target information block including UE capability information;
wherein, based on the target information block, the second value is equal to a first default value; the first default value is a positive constant.

The present application discloses a method used in a second node for wireless communication, comprising:

sending a first DCI format;
operating a first signal, the first signal occupying at least one PRB bundle in a frequency domain, any PRB bundle occupied by the first signal in the frequency domain belonging to a first sub-band, the first sub-band comprising a plurality of consecutive PRBs, and a first value being equal to the number of PRBs comprised in the first sub-band; wherein the first DCI format comprises a first field, the first field in the first DCI format is used for indicating a frequency domain resource occupied by the first signal, and the size of the first field in the first DCI format is related to the first value; a target PRB bundle is 1 PRB bundle occupied by the first signal in the frequency domain, the target PRB bundle includes at least 1 PRB, the number of PRBs comprised in the target PRB bundle is related to both the number of PRBs scheduled by the first DCI format and a target threshold, and the target threshold is equal to the ratio of a second value to 2; and the second value is related to the capability of the receiver of the first DCI format and the first value is greater than the second value.

According to one aspect of the present application, the method described above is characterized in that, the first sub-band is a BWP.

According to one aspect of the present application, the method described above is characterized in that, when the PRBs scheduled by the first DCI format are consecutive and the number of PRBs scheduled by the first DCI format is greater than the target threshold, the number of PRBs comprised in the target PRB bundle is the same as the scheduled bandwidth; when the PRBs scheduled by the first DCI format are not consecutive or the number of PRBs scheduled by the first DCI format is not greater than the target threshold, the number of PRBs comprised in the target PRB bundle is equal to 2 or 4.

According to one aspect of the present application, the method described above is characterized in that, the first DCI format includes a second field and the second field in the first DCI format is set to 1; the first value set comprises 2 values and the first value set is configurable; a first reference value is one of the 2 values comprised in the first value set and the first reference value is configured to one of 2 or 4; and when the PRBs scheduled by the first DCI format are not consecutive or the number of PRBs scheduled by the first DCI format is not greater than the target threshold, the number of PRBs comprised in the target PRB bundle is equal to the first reference value.

According to one aspect of the present application, the method described above is characterized in that, the first value is used to determine the size of the first field in the first DCI format.

According to one aspect of the present application, the method described above is characterized in that, the first field in the first DCI format includes a first resource indication value, the first resource indication value is related to the first value, and the first resource indication value is used to indicate a frequency domain resource occupied by the first signal;

According to one aspect of the present application, the method described above is characterized in that, the first field in the first DCI format is used to indicate the RBGs allocated to the first signal in the first resource block group set and the total number of RBGs comprised in the first resource block group set is associated with the first value.

According to one aspect of the present application, the method described above is characterized in that, the first node can assume that the same precoding is applied to any of the PRBs in the target PRB bundle.

According to one aspect of the present application, the method described above is characterized in that it includes:

receiving a target information block, the target information block including UE capability information;
wherein, based on the target information block, the second value is equal to a first default value; the first default value is a positive constant.

The present application discloses a first node for wireless communication, comprising:

a first receiver receiving a first DCI format;
a first transceiver operating a first signal, the first signal occupying at least one PRB bundle in a frequency domain, any PRB bundle occupied by the first signal in the frequency domain belonging to a first sub-band, the first sub-band comprising a plurality of consecutive PRBs, and a first value being equal to the number of PRBs comprised in the first sub-band;
wherein the first DCI format comprises a first field, the first field in the first DCI format is used for indicating a frequency domain resource occupied by the first signal, and the size of the first field in the first DCI format is related to the first value; a target PRB bundle is 1 PRB bundle occupied by the first signal in the frequency domain, the target PRB bundle includes at least 1 PRB, the number of PRBs comprised in the target PRB bundle is related to both the number of PRBs scheduled by the first DCI format and a target threshold, and the target threshold is equal to the ratio of a second value to 2; and the second value is related to the capability of the receiver of the first DCI format and the first value is greater than the second value.

The present application discloses a second node for wireless communication, comprising:

a second transmitter sending a first DCI format;
a second transceiver operating a first signal, the first signal occupying at least one PRB bundle in a frequency domain, any PRB bundle occupied by the first signal in the frequency domain belonging to a first sub-band, the first sub-band comprising a plurality of consecutive PRBs, and a first value being equal to the number of PRBs comprised in the first sub-band;
wherein the first DCI format comprises a first field, the first field in the first DCI format is used for indicating a frequency domain resource occupied by the first signal, and the size of the first field in the first DCI format is related to the first value; a target PRB bundle is 1 PRB bundle occupied by the first signal in the frequency domain, the target PRB bundle includes at least 1 PRB, the number of PRBs comprised in the target PRB bundle is related to both the number of PRBs scheduled by the first DCI format and a target threshold, and the target threshold is equal to the ratio of a second value to 2; and the second value is related to the capability of the receiver of the first DCI format and the first value is greater than the second value.

The present application discloses a method used in a first node for wireless communication, comprising:

receiving a first DCI format;
operating a first signal, the first signal occupying at least one PRB bundle in a frequency domain, any PRB bundle occupied by the first signal in the frequency domain belonging to a first sub-band, the first sub-band comprising a plurality of consecutive PRBs, and a first value being equal to the number of PRBs comprised in the first sub-band;
wherein the first DCI format comprises a first field, the first field in the first DCI format is used for indicating a frequency domain resource occupied by the first signal, and the size of the first field in the first DCI format is related to the first value; a target PRB bundle is 1 PRB bundle occupied by the first signal in the frequency domain, the target PRB bundle includes at least 1 PRB, the number of PRBs comprised in the target PRB bundle is related to both the number of PRBs scheduled by the first DCI format and a target threshold, the target threshold is equal to the ratio of a second value to 2, the second value is a positive integer, the second value is a constant or indicated by higher layer signaling, and the first value is not equal to the second value.

As one embodiment, the advantages of the above method include: it is conducive to UE energy conservation.

As one embodiment, the advantages of the above method include: improved transmission performance.

As one embodiment, the advantages of the above method include: improved flexibility in scheduling.

As one embodiment, the advantages of the above method include: optimized resource allocation and improved resource utilization.

As one embodiment, the advantages of the above method include: the trade-off between precoding flexibility and channel estimation is optimized.

As one embodiment, the advantages of the above method include: good compatibility.

As one embodiment, the advantages of the above method include: the changes to the existing 3GPP standards are minor.

According to one aspect of the present application, the method described above is characterized in that, the first sub-band is a BWP.

According to one aspect of the present application, the method described above is characterized in that, when the PRBs scheduled by the first DCI format are consecutive and the number of PRBs scheduled by the first DCI format is greater than the target threshold, the number of PRBs comprised in the target PRB bundle is the same as the scheduled bandwidth; when the PRBs scheduled by the first DCI format are not consecutive or the number of PRBs scheduled by the first DCI format is not greater than the target threshold, the number of PRBs comprised in the target PRB bundle is equal to 2 or 4.

According to one aspect of the present application, the method described above is characterized in that, the first DCI format includes a second field and the second field in the first DCI format is set to 1; the first value set comprises 2 values and the first value set is configurable; a first reference value is one of the 2 values comprised in the first value set and the first reference value is configured to one of 2 or 4; and when the PRBs scheduled by the first DCI format are not consecutive or the number of PRBs scheduled by the first DCI format is not greater than the target threshold, the number of PRBs comprised in the target PRB bundle is equal to the first reference value.

According to one aspect of the present application, the method described above is characterized in that, the first value is used to determine the size of the first field in the first DCI format.

According to one aspect of the present application, the method described above is characterized in that, the first field in the first DCI format includes a first resource indication value, the first resource indication value is related to the first value, and the first resource indication value is used to indicate a frequency domain resource occupied by the first signal;

According to one aspect of the present application, the method described above is characterized in that, the first field in the first DCI format is used to indicate the RBGs allocated to the first signal in the first resource block group set and the total number of RBGs comprised in the first resource block group set is associated with the first value.

According to one aspect of the present application, the method described above is characterized in that,

The first node can assume that the same precoding is applied to any of the PRBs in the target PRB bundle.

According to one aspect of the present application, the method described above is characterized in that,

One of the first value and the second value is equal to the number of PRBs comprised in the BWP to which the first signal belongs in the frequency domain.

According to one aspect of the present application, the method described above is characterized in that,

The greater of the first value and the second value is equal to the number of PRBs comprised in the BWP to which the first signal belongs in the frequency domain.

As one embodiment, the smaller of the first value and the second value is equal to the number of PRBs comprised in the BWP to which the first signal belongs in the frequency domain.

As one embodiment, the BWP to which the first signal belongs in the frequency domain is an active BWP.

As one embodiment, the BWP to which the first signal belongs in the frequency domain is a BWP used to send the first signal.

As one embodiment, the first signal is scheduled on the BWP to which the first signal belongs in the frequency domain.

As one embodiment, the statement that the second value is a constant or indicated by higher layer signaling includes: the second value is equal to a first default value; the first default value is a positive constant.

As one embodiment, the statement that the second value is a constant or indicated by higher layer signaling includes: the second value is configured by RRC signaling.

As one embodiment, the statement that the second value is a constant or indicated by higher layer signaling includes: the second value is configured by MAC CE.

As one embodiment, the statement that the second value is a constant or indicated by higher layer signaling includes: The second value is indicated by the reported UE capability information.

As one embodiment, the statement that the second value is a constant or indicated by higher layer signaling includes: The second value is related to the capability of the receiver of the first DCI format.

According to one aspect of the present application, the method described above is characterized in that, The first value is greater than the second value.

According to one aspect of the present application, the method described above is characterized in that, The first value is less than the second value.

According to one aspect of the present application, the method described above is characterized in that, the second value is equal to a first default value; the first default value is a positive constant.

According to one aspect of the present application, the method described above is characterized in that, the second value is configured by RRC signaling.

According to one aspect of the present application, the method described above is characterized in that, the second value is configured by MAC CE.

According to one aspect of the present application, the method described above is characterized in that it includes:

sending a target information block, the target information block including UE capability information;
wherein, based on the target information block, the second value is equal to a first default value; the first default value is a positive constant.

The present application discloses a method used in a second node for wireless communication, comprising:

sending a first DCI format;
operating a first signal, the first signal occupying at least one PRB bundle in a frequency domain, any PRB bundle occupied by the first signal in the frequency domain belonging to a first sub-band, the first sub-band comprising a plurality of consecutive PRBs, and a first value being equal to the number of PRBs comprised in the first sub-band;
wherein the first DCI format comprises a first field, the first field in the first DCI format is used for indicating a frequency domain resource occupied by the first signal, and the size of the first field in the first DCI format is related to the first value; a target PRB bundle is 1 PRB bundle occupied by the first signal in the frequency domain, the target PRB bundle includes at least 1 PRB, the number of PRBs comprised in the target PRB bundle is related to both the number of PRBs scheduled by the first DCI format and a target threshold, the target threshold is equal to the ratio of a second value to 2, the second value is a positive integer, the second value is a constant or indicated by higher layer signaling, and the first value is not equal to the second value.

According to one aspect of the present application, the method described above is characterized in that, the first sub-band is a BWP.

According to one aspect of the present application, the method described above is characterized in that, when the PRBs scheduled by the first DCI format are consecutive and the number of PRBs scheduled by the first DCI format is greater than the target threshold, the number of PRBs comprised in the target PRB bundle is the same as the scheduled bandwidth; when the PRBs scheduled by the first DCI format are not consecutive or the number of PRBs scheduled by the first DCI format is not greater than the target threshold, the number of PRBs comprised in the target PRB bundle is equal to 2 or 4.

According to one aspect of the present application, the method described above is characterized in that, the first DCI format includes a second field and the second field in the first DCI format is set to 1; the first value set comprises 2 values and the first value set is configurable; a first reference value is one of the 2 values comprised in the first value set and the first reference value is configured to one of 2 or 4; and when the PRBs scheduled by the first DCI format are not consecutive or the number of PRBs scheduled by the first DCI format is not greater than the target threshold, the number of PRBs comprised in the target PRB bundle is equal to the first reference value.

According to one aspect of the present application, the method described above is characterized in that, the first value is used to determine the size of the first field in the first DCI format.

According to one aspect of the present application, the method described above is characterized in that, the first field in the first DCI format includes a first resource indication value, the first resource indication value is related to the first value, and the first resource indication value is used to indicate a frequency domain resource occupied by the first signal;

According to one aspect of the present application, the method described above is characterized in that,

the first field in the first DCI format is used to indicate the RBGs allocated to the first signal in the first resource block group set and the total number of RBGs comprised in the first resource block group set is associated with the first value.

According to one aspect of the present application, the method described above is characterized in that, The first node can assume that the same precoding is applied to any of the PRBs in the target PRB bundle.

According to one aspect of the present application, the method described above is characterized in that, One of the first value and the second value is equal to the number of PRBs comprised in the BWP to which the first signal belongs in the frequency domain.

According to one aspect of the present application, the method described above is characterized in that, The greater of the first value and the second value is equal to the number of PRBs comprised in the BWP to which the first signal belongs in the frequency domain.

According to one aspect of the present application, the method described above is characterized in that, The first value is greater than the second value.

According to one aspect of the present application, the method described above is characterized in that, The first value is less than the second value.

According to one aspect of the present application, the method described above is characterized in that, the second value is equal to a first default value; the first default value is a positive constant.

According to one aspect of the present application, the method described above is characterized in that, the second value is configured by RRC signaling.

According to one aspect of the present application, the method described above is characterized in that, the second value is configured by MAC CE.

According to one aspect of the present application, the method described above is characterized in that it includes:

receiving a target information block, the target information block including UE capability information;

wherein, based on the target information block, the second value is equal to a first default value; the first default value is a positive constant.

The present application discloses a first node for wireless communication, comprising:

a first receiver receiving a first DCI format;

a first transceiver operating a first signal, the first signal occupying at least one PRB bundle in a frequency domain, any PRB bundle occupied by the first signal in the frequency domain belonging to a first sub-band, the first sub-band comprising a plurality of consecutive PRBs, and a first value being equal to the number of PRBs comprised in the first sub-band;

wherein the first DCI format comprises a first field, the first field in the first DCI format is used for indicating a frequency domain resource occupied by the first signal, and the size of the first field in the first DCI format is related to the first value; a target PRB bundle is 1 PRB bundle occupied by the first signal in the frequency domain, the target PRB bundle includes at least 1 PRB, the number of PRBs comprised in the target PRB bundle is related to both the number of PRBs scheduled by the first DCI format and a target threshold, the target threshold is equal to the ratio of a second value to 2, the second value is a positive integer, the second value is a constant or indicated by higher layer signaling, and the first value is not equal to the second value.

According to one aspect of the present application, the first node is characterized in that, the first sub-band is a BWP.

According to one aspect of the present application, the first node is characterized in that, when the PRBs scheduled by the first DCI format are consecutive and the number of PRBs scheduled by the first DCI format is greater than the target threshold, the number of PRBs comprised in the target PRB bundle is the same as the scheduled bandwidth; when the PRBs scheduled by the first DCI format are not consecutive or the number of PRBs scheduled by the first DCI format is not greater than the target threshold, the number of PRBs comprised in the target PRB bundle is equal to 2 or 4.

According to one aspect of the present application, the first node is characterized in that, the first DCI format includes a second field and the second field in the first DCI format is set to 1; the first value set comprises 2 values and the first value set is configurable; a first reference value is one of the 2 values comprised in the first value set and the first reference value is configured to one of 2 or 4; and when the PRBs scheduled by the first DCI format are not consecutive or the number of PRBs scheduled by the first DCI format is not greater than the target threshold, the number of PRBs comprised in the target PRB bundle is equal to the first reference value.

According to one aspect of the present application, the first node is characterized in that, the first value is used to determine the size of the first field in the first DCI format.

According to one aspect of the present application, the first node is characterized in that, the first field in the first DCI format includes a first resource indication value, the first resource indication value is related to the first value, and the first resource indication value is used to indicate a frequency domain resource occupied by the first signal;

According to one aspect of the present application, the first node is characterized in that, the first field in the first DCI format is used to indicate the RBGs allocated to the first signal in the first resource block group set and the total number of RBGs comprised in the first resource block group set is associated with the first value.

According to one aspect of the present application, the first node is characterized in that, The first node can assume that the same precoding is applied to any of the PRBs in the target PRB bundle.

According to one aspect of the present application, the first node is characterized in that, one of the first value and the second value is equal to the number of PRBs comprised in the BWP to which the first signal belongs in the frequency domain.

According to one aspect of the present application, the first node is characterized in that, the greater of the first value and the second value is equal to the number of PRBs comprised in the BWP to which the first signal belongs in the frequency domain.

According to one aspect of the present application, the first node is characterized in that, the first value is greater than the second value.

According to one aspect of the present application, the first node is characterized in that, the first value is less than the second value.

According to one aspect of the present application, the first node is characterized in that, the second value is equal to a first default value; the first default value is a positive constant.

According to one aspect of the present application, the first node is characterized in that, the second value is configured by RRC signaling.

According to one aspect of the present application, the first node is characterized in that, the second value is configured by MAC CE.

According to one aspect of the present application, the first node is characterized in that it includes:

a first transmitter sending a target information block, the target information block including UE capability information; wherein, based on the target information block, the second value is equal to a first default value; the first default value is a positive constant.

The present application discloses a second node for wireless communication, comprising:

a second transmitter sending a first DCI format;
a second transceiver operating a first signal, the first signal occupying at least one PRB bundle in a frequency domain, any PRB bundle occupied by the first signal in the frequency domain belonging to a first sub-band, the first sub-band comprising a plurality of consecutive PRBs, and a first value being equal to the number of PRBs comprised in the first sub-band;
wherein the first DCI format comprises a first field, the first field in the first DCI format is used for indicating a frequency domain resource occupied by the first signal, and the size of the first field in the first DCI format is related to the first value; a target PRB bundle is 1 PRB bundle occupied by the first signal in the frequency domain, the target PRB bundle includes at least 1 PRB, the number of PRBs comprised in the target PRB bundle is related to both the number of PRBs scheduled by the first DCI format and a target threshold, the target threshold is equal to the ratio of a second value to 2, the second value is a positive integer, the second value is a constant or indicated by higher layer signaling, and the first value is not equal to the second value.

The present application discloses a method used in a first node for wireless communication, comprising:

receiving a first DCI format;
wherein the first DCI format comprises a first field, the first field in the first DCI format is used for indicating frequency domain resource allocation, the size of the first field in the first DCI format is related to a first value, the first value is equal to the size of a first sub-band, and the first sub-band includes a plurality of consecutive PRBs; the target PRB bundle includes at least 1 PRB, the number of PRBs comprised in the target PRB bundle is related to both the number of PRBs scheduled by the first DCI format and a target threshold, the target threshold is equal to the ratio of a second value to 2, the first value is greater than the second value, and the second value is greater than 0.

As one embodiment, the advantages of the above method include: it is conducive to UE energy conservation.

As one embodiment, the advantages of the above method include: improved transmission performance.

As one embodiment, the advantages of the above method include: improved flexibility in scheduling.

As one embodiment, the advantages of the above method include: optimized resource allocation and improved resource utilization.

As one embodiment, the advantages of the above method include: the trade-off between precoding flexibility and channel estimation is optimized.

As one embodiment, the advantages of the above method include: good compatibility.

As one embodiment, the advantages of the above method include: the changes to the existing 3GPP standards are minor.

As one embodiment, the statement that the size of the first field in the first DCI format is related to a first value includes: the size of the first field in the first DCI format depends on a first value.

As one embodiment, the size of the first sub-band refers to: the number of PRBs comprised in the first sub-band.

As one embodiment, the number of PRBs scheduled by the first DCI format and the size of the PRBs scheduled by the first DCI format are identical.

As one embodiment, the second value is related to the maximum bandwidth for PDSCH.

As one embodiment, the second value is not greater than the maximum number of PRBs that can be occupied by PDSCH in one BWP.

As one embodiment, the second value is not greater than the maximum number of PRBs for PDSCH.

As one embodiment, the second value is related to the maximum bandwidth for PUSCH.

As one embodiment, the second value is not greater than the maximum number of PRBs that can be occupied by PUSCH in one BWP.

As one embodiment, the second value is not greater than the maximum number of PRBs for PUSCH.

According to one aspect of the present application, the method described above is characterized in that it includes:

operating a first signal;
wherein the number of PRBs comprised in the target PRB bundle is used to operate the first signal.

As one embodiment, the PRB bundling procedures are for the first signal.

As one embodiment, the first field in the first DCI format is used to indicate the frequency domain resource occupied by the first signal.

As one embodiment, the frequency domain resource occupied by the first signal belongs to the first sub-band.

According to one aspect of the present application, the method described above is characterized in that,
The second value is related to the capability of the receiver of the first DCI format.

According to one aspect of the present application, the method described above is characterized in that,
The second value is a constant.

According to one aspect of the present application, the method described above is characterized in that,
The second value is predefined.

According to one aspect of the present application, the method described above is characterized in that,
The second value is configurable.

According to one aspect of the present application, the method described above is characterized in that,
the first sub-band is a BWP.

According to one aspect of the present application, the method described above is characterized in that,
when the PRBs scheduled by the first DCI format are consecutive and the number of PRBs scheduled by the first DCI format is greater than the target threshold, the number of PRBs comprised in the target PRB bundle is the same as the scheduled bandwidth; when the PRBs scheduled by the first DCI format are not consecutive or the number of PRBs scheduled by the first DCI format is not greater than the target threshold, the number of PRBs comprised in the target PRB bundle is equal to 2 or 4.

According to one aspect of the present application, the method described above is characterized in that,
the first DCI format includes a second field and the second field in the first DCI format is set to 1; the first value set comprises 2 values and the first value set is configurable; a first reference value is one of the 2 values comprised in the first value set and the first reference value is configured to one of 2 or 4; and when the PRBs scheduled by the first DCI format are not consecutive or the number of PRBs scheduled by the first DCI format is not greater than the target threshold, the number of PRBs comprised in the target PRB bundle is equal to the first reference value.

According to one aspect of the present application, the method described above is characterized in that,
the first value is used to determine the size of the first field in the first DCI format.

According to one aspect of the present application, the method described above is characterized in that,
the first field in the first DCI format includes a first resource indication value, the first resource indication value is related to the first value, and the first resource indication value is used to indicate a frequency domain resource occupied by the first signal;

According to one aspect of the present application, the method described above is characterized in that, the first field in the first DCI format is used to indicate the RBGs allocated to the first signal in the first resource block group set and the total number of RBGs comprised in the first resource block group set is associated with the first value.

According to one aspect of the present application, the method described above is characterized in that, The first node can assume that the same precoding is applied to any of the PRBs in the target PRB bundle.

According to one aspect of the present application, the method described above is characterized in that, the second value is equal to a first default value; the first default value is a positive constant.

According to one aspect of the present application, the method described above is characterized in that, the second value is configured by RRC signaling.

According to one aspect of the present application, the method described above is characterized in that, the second value is configured by MAC CE.

According to one aspect of the present application, the method described above is characterized in that it includes:

sending a target information block, the target information block including UE capability information;
wherein, based on the target information block, the second value is equal to a first default value; the first default value is a positive constant.

The present application discloses a method used in a second node for wireless communication, comprising:

sending a first DCI format;
wherein the first DCI format comprises a first field, the first field in the first DCI format is used for indicating frequency domain resource allocation, the size of the first field in the first DCI format is related to a first value, the first value is equal to the size of a first sub-band, and the first sub-band includes a plurality of consecutive PRBs; the target PRB bundle includes at least 1 PRB, the number of PRBs comprised in the target PRB bundle is related to both the number of PRBs scheduled by the first DCI format and a target threshold, the target threshold is equal to the ratio of a second value to 2, the first value is greater than the second value, and the second value is greater than 0.

According to one aspect of the present application, the method described above is characterized in that it includes:

operating a first signal;
wherein the number of PRBs comprised in the target PRB bundle is used by the receiver of the first DCI format to operate the first signal.

As one embodiment, the PRB bundling procedures are for the first signal.

As one embodiment, the first field in the first DCI format is used to indicate the frequency domain resource occupied by the first signal.

As one embodiment, the frequency domain resource occupied by the first signal belongs to the first sub-band.

According to one aspect of the present application, the method described above is characterized in that, The second value is related to the capability of the receiver of the first DCI format.

According to one aspect of the present application, the method described above is characterized in that, The second value is a constant.

According to one aspect of the present application, the method described above is characterized in that, The second value is predefined.

According to one aspect of the present application, the method described above is characterized in that, The second value is configurable.

According to one aspect of the present application, the method described above is characterized in that, the first sub-band is a BWP.

According to one aspect of the present application, the method described above is characterized in that, when the PRBs scheduled by the first DCI format are consecutive and the number of PRBs scheduled by the first DCI format is greater than the target threshold, the number of PRBs comprised in the target PRB bundle is the same as the scheduled bandwidth; when the PRBs scheduled by the first DCI format are not consecutive or the number of PRBs scheduled by the first DCI format is not greater than the target threshold, the number of PRBs comprised in the target PRB bundle is equal to 2 or 4.

According to one aspect of the present application, the method described above is characterized in that, the first DCI format includes a second field and the second field in the first DCI format is set to 1; the first value set comprises 2 values and the first value set is configurable; a first reference value is one of the 2 values comprised in the first value set and the first reference value is configured to one of 2 or 4; and when the PRBs scheduled by the first DCI format are not consecutive or the number of PRBs scheduled by the first DCI format is not greater than the target threshold, the number of PRBs comprised in the target PRB bundle is equal to the first reference value.

According to one aspect of the present application, the method described above is characterized in that, the first value is used to determine the size of the first field in the first DCI format.

According to one aspect of the present application, the method described above is characterized in that, the first field in the first DCI format includes a first resource indication value, the first resource indication value is related to the first value, and the first resource indication value is used to indicate a frequency domain resource occupied by the first signal;

According to one aspect of the present application, the method described above is characterized in that, the first field in the first DCI format is used to indicate the RBGs allocated to the first signal in the first resource block group set and the total number of RBGs comprised in the first resource block group set is associated with the first value.

According to one aspect of the present application, the method described above is characterized in that, The first node can assume that the same precoding is applied to any of the PRBs in the target PRB bundle.

According to one aspect of the present application, the method described above is characterized in that, the second value is equal to a first default value; the first default value is a positive constant.

According to one aspect of the present application, the method described above is characterized in that, the second value is configured by RRC signaling.

According to one aspect of the present application, the method described above is characterized in that, the second value is configured by MAC CE.

According to one aspect of the present application, the method described above is characterized in that it includes:

receiving a target information block, the target information block including UE capability information;
wherein, based on the target information block, the second value is equal to a first default value; the first default value is a positive constant.

The present application discloses a first node for wireless communication, comprising:

a first receiver receiving a first DCI format;
wherein the first DCI format comprises a first field, the first field in the first DCI format is used for indicating frequency domain resource allocation, the size of the first field in the first DCI format is related to a first value, the first value is equal to the size of a first sub-band, and the first sub-band includes a plurality of consecutive PRBs; the target PRB bundle includes at least 1 PRB, the number of PRBs comprised in the target PRB bundle is related to both the number of PRBs scheduled by the first DCI format and a target threshold, the target threshold is equal to the ratio of a second value to 2, the first value is greater than the second value, and the second value is greater than 0.

According to one aspect of the present application, the first node is characterized in that it includes:

a first transceiver operating a first signal;
wherein the number of PRBs comprised in the target PRB bundle is used to operate the first signal.

As one embodiment, the PRB bundling procedures are for the first signal.

As one embodiment, the first field in the first DCI format is used to indicate the frequency domain resource occupied by the first signal.

As one embodiment, the frequency domain resource occupied by the first signal belongs to the first sub-band.

According to one aspect of the present application, the first node is characterized in that, the second value is related to the capability of the receiver of the first DCI format.

According to one aspect of the present application, the first node is characterized in that, the second value is a constant.

According to one aspect of the present application, the first node is characterized in that, the second value is predefined.

According to one aspect of the present application, the first node is characterized in that, the second value is configurable.

According to one aspect of the present application, the first node is characterized in that, the first sub-band is a BWP.

According to one aspect of the present application, the first node is characterized in that,

when the PRBs scheduled by the first DCI format are consecutive and the number of PRBs scheduled by the first DCI format is greater than the target threshold, the number of PRBs comprised in the target PRB bundle is the same as the scheduled bandwidth; when the PRBs scheduled by the first DCI format are not consecutive or the number of PRBs scheduled by the first DCI format is not greater than the target threshold, the number of PRBs comprised in the target PRB bundle is equal to 2 or 4.

According to one aspect of the present application, the first node is characterized in that, the first DCI format includes a second field and the second field in the first DCI format is set to 1; the first value set comprises 2 values and the first value set is configurable; a first reference value is one of the 2 values comprised in the first value set and the first reference value is configured to one of 2 or 4; and when the PRBs scheduled by the first DCI format are not consecutive or the number of PRBs scheduled by the first DCI format is not greater than the target threshold, the number of PRBs comprised in the target PRB bundle is equal to the first reference value.

According to one aspect of the present application, the first node is characterized in that, the first value is used to determine the size of the first field in the first DCI format.

According to one aspect of the present application, the first node is characterized in that, the first field in the first DCI format includes a first resource indication value, the first resource indication value is related to the first value, and the first resource indication value is used to indicate a frequency domain resource occupied by the first signal;

According to one aspect of the present application, the first node is characterized in that, the first field in the first DCI format is used to indicate the RBGs allocated to the first signal in the first resource block group set and the total number of RBGs comprised in the first resource block group set is associated with the first value.

According to one aspect of the present application, the first node is characterized in that, The first node can assume that the same precoding is applied to any of the PRBs in the target PRB bundle. According to one aspect of the present application, the first node is characterized in that, the second value is equal to a first default value; the first default value is a positive constant.

According to one aspect of the present application, the first node is characterized in that, the second value is configured by RRC signaling.

According to one aspect of the present application, the first node is characterized in that, the second value is configured by MAC CE.

According to one aspect of the present application, the first node is characterized in that it includes:

a first transmitter sending a target information block, the target information block including UE capability information; wherein, based on the target information block, the second value is equal to a first default value; the first default value is a positive constant.

The present application discloses a second node for wireless communication, comprising:

a second transmitter sending a first DCI format;
wherein the first DCI format comprises a first field, the first field in the first DCI format is used for indicating frequency domain resource allocation, the size of the first field in the first DCI format is related to a first value, the first value is equal to the size of a first sub-band, and the first sub-band includes a plurality of consecutive PRBs; the target PRB bundle includes at least 1 PRB, the number of PRBs comprised in the target PRB bundle is related to both the number of PRBs scheduled by the first DCI format and a target threshold, the target threshold is equal to the ratio of a second value to 2, the first value is greater than the second value, and the second value is greater than 0.

## Description of Drawings

Other features, objects, and advantages of the present application will become more apparent by reading the detailed description of the non-limiting embodiments with reference to the following drawings:

FIG. 1 shows a processing flow chart of a first node according to one embodiment of the present application;
FIG. 2 shows a schematic diagram of a network architecture according to one embodiment of the present application;
FIG. 3 shows a schematic diagram of a wireless protocol architecture for a user plane and a control plane according to one embodiment of the present application;
FIG. 4 shows a schematic view of a first communications device and a second communications device according to one embodiment of the present application;
FIG. 5 shows a flow chart of signal transmission according to one embodiment of the present application;
FIG. 6 shows a schematic diagram of a relationship between a target information block, a second value, and a first default value according to one embodiment of the present application;

FIG. 7 shows a schematic diagram of a relationship between a first information block, a second information block, a first range of values, and a second value according to one embodiment of the present application;

FIG. 8 shows a schematic diagram of a relationship between the size of a first field in a first DCI format and a first value according to one embodiment of the present application.

FIG. 9 shows a schematic diagram of a relationship between a first DCI format, a second field, a first value set, a first reference value, a target threshold, and the number of PRBs comprised in a target PRB bundle according to one embodiment of the present application;

FIG. 10 shows a first field in a first DCI format, a first resource indication value, a first value, and a first signal according to one embodiment of the present application;

FIG. 11 shows a schematic diagram of a relationship between a first field in a first DCI format, a first resource block group set, a first value, and a first signal according to one embodiment of the present application;

FIG. 12 shows a structural block diagram of a processing apparatus in a first node device according to one embodiment of the present application;

FIG. 13 shows a structural block diagram of a processing apparatus in a second node device according to one embodiment of the present application.

## Detailed Description

The technical solutions of this application will be described in further detail below in conjunction with the accompanying drawings. It is to be noted that in the absence of conflict, the embodiments of the present application and the features in the embodiments may be combined with each other arbitrarily.

## Embodiment 1

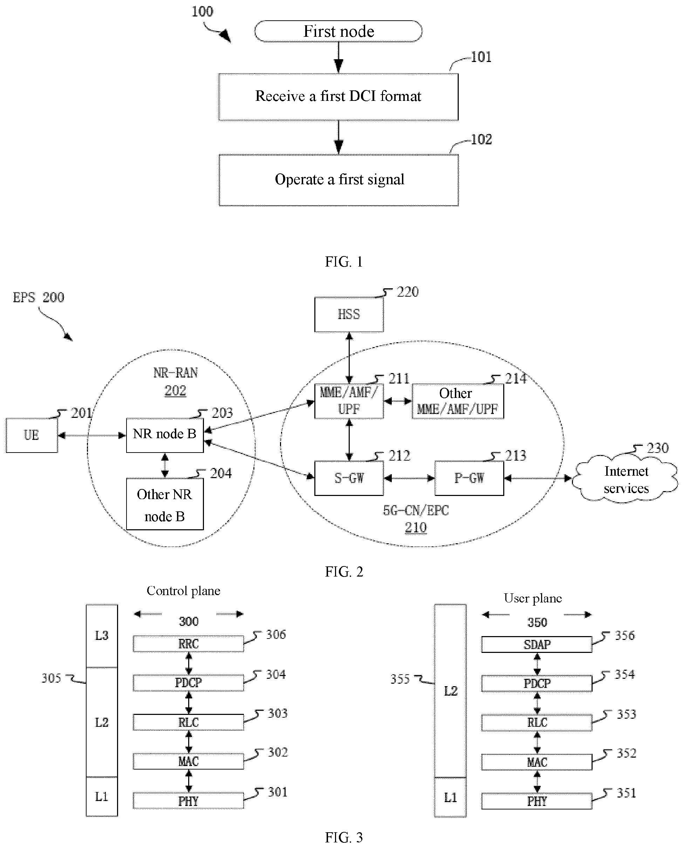

Embodiment 1 illustrates a processing flow chart of a first node according to one embodiment of the present application, as shown in FIG. 1.

In Embodiment 1, the first node in the present application receives a first DCI format in step 101; and operates a first signal in step 102.

In Embodiment 1, the first signal occupies at least 1 PRB bundle in a frequency domain, any PRB bundle occupied by the first signal in the frequency domain belongs to a first sub-band, the first sub-band comprises a plurality of consecutive PRBs, and a first value is equal to the number of PRBs comprised in the first sub-band; the first DCI format comprises a first field, the first field in the first DCI format is used for indicating a frequency domain resource occupied by the first signal, and the size of the first field in the first DCI format is related to the first value; a target PRB bundle is 1 PRB bundle occupied by the first signal in the frequency domain, the target PRB bundle comprises at least 1 PRB, the number of PRBs comprised in the target PRB bundle is related to both the number of PRBs scheduled by the first DCI format and a target threshold, and the target threshold is equal to the ratio of a second value to 2; and the second value is related to the capability of the receiver of the first DCI format and the first value is greater than the second value.

As one embodiment, the first DCI format includes a plurality of fields.

As one embodiment, the first DCI format includes a DCI (downlink control information) signaling.

As one embodiment, the first DCI format is physical layer signaling.

As one embodiment, the first DCI format is DCI format 0_0.

As one embodiment, the first DCI format is DCI format 0_1.

As one embodiment, the first DCI format is DCI format 0_2.

As one embodiment, the first DCI format is DCI format 0_3.

As one embodiment, the first DCI format is DCI format 0_4.

As one embodiment, the first DCI format is DCI format 0_5.

As one embodiment, the first DCI format is DCI format 1_0.

As one embodiment, the first DCI format is DCI format 1_1.

As one embodiment, the first DCI format is DCI format 1_2.

As one embodiment, the first DCI format is DCI format 1_3.

As one embodiment, the first DCI format is DCI format 1_4.

As one embodiment, the first DCI format is DCI format 1_5.

As one embodiment, the first DCI format is DCI format 4_0.

As one embodiment, the first DCI format is DCI format 4_1.

As one embodiment, the first DCI format is DCI format 4_2.

As one embodiment, the first DCI format is DCI format 5_0.

As one embodiment, the first DCI format is DCI format 5_1.

As one embodiment, the first DCI format is DCI format 5_2.

As one embodiment, the first DCI format is DCI format 6_0.

As one embodiment, the first DCI format is DCI format 6_1.

As one embodiment, the first DCI format is DCI format 6_2.

As one embodiment, the first DCI format is UpLink Grant Signaling.

As one embodiment, the first DCI format is DownLink Grant Signaling.

As one embodiment, the first DC format includes layer 1 (L1) signaling.

As one embodiment, the first DC format includes layer 1 (L1) control signaling.

As one embodiment, for the first node, the statement operates a first signal includes: receiving the first signal.

As one embodiment, for the first node, the statement operates a first signal includes: the first signal is a PDSCH and receiving this PDSCH.

As one embodiment, for the first node, the statement operates a first signal includes: the first signal is a PDSCH and receiving at least one bit block on this PDSCH.

As one embodiment, for the first node, the statement operates a first signal includes: sending the first signal.

As one embodiment, for the first node, the statement operates a first signal includes: the first signal is a PUSCH and sending this PUSCH.

As one embodiment, for the first node, the statement operates a first signal includes: the first signal is a PUSCH and sending at least one bit block on this PUSCH.

As one embodiment, the first signal includes a wireless signal.

As one embodiment, the first signal includes a baseband signal.

As one embodiment, the first signal includes a radio frequency signal.

As one embodiment, the first signal includes a physical layer channel.

As one embodiment, the first signal includes a PDSCH (physical downlink shared channel).

As one embodiment, the first signal includes a PUSCH (physical uplink shared channel).

As one embodiment, the first signal is PDSCH.

As one embodiment, the first signal is PUSCH.

As one embodiment, the first signal belongs to PDSCH.

As one embodiment, the first signal belongs to PUSCH.

As one embodiment, the first signal is a signal transmitted on PDSCH.

As one embodiment, the first signal is a signal transmitted on PUSCH.

As one embodiment, the first signal includes a signal transmitted on PDSCH.

As one embodiment, the first signal includes a signal transmitted on PUSCH.

As one embodiment, the first signal occupies a plurality of PRBs in the frequency domain.

As one embodiment, in the present application, a bit block includes a transport block (TB).

As one embodiment, in the present application, a bit block includes at least one of a transfer block or CSI (channel state information) reporting bits.

As one embodiment, in the present application, a bit block is sent on a PUSCH or a PDSCH after at least channel coding.

As one embodiment, for the second node, the statement operates a first signal includes: sending the first signal.

As one embodiment, for the second node, the statement operates a first signal includes: the first signal is a PDSCH and sending this PDSCH.

As one embodiment, for the second node, the statement operates a first signal includes: the first signal is a PDSCH and sending at least one bit block on this PDSCH.

As one embodiment, for the second node, the statement operates a first signal includes: receiving the first signal.

As one embodiment, for the second node, the statement operates a first signal includes: the first signal is a PUSCH and receiving this PUSCH.

As one embodiment, for the second node, the statement operates a first signal includes: the first signal is a PUSCH and receiving at least one bit block on this PUSCH.

As one embodiment, the meaning of the first signal occupying one PRB bundle in the frequency domain includes: at least one PRB in this PRB bundle belongs to the frequency domain resource occupied by the first signal.

As one embodiment, the meaning of the first signal occupying one PRB bundle in the frequency domain includes: all PRBs in this PRB bundle belong to the frequency domain resource occupied by the first signal.

As one embodiment, the meaning of the first signal occupying one PRB bundle in the frequency domain includes: at least one PRB in this PRB bundle is allocated to the first signal.

As one embodiment, the meaning of the first signal occupying one PRB bundle in the frequency domain includes: all PRBs in this PRB bundle are allocated to the first signal.

As one embodiment, a PRB bundle comprises at least one PRB (physical resource block).

As one embodiment, a PRB bundle is composed of consecutive resource blocks in the frequency domain.

As one embodiment, a PRB bundle is composed of consecutive PRBs in the frequency domain.

As one embodiment, a PRB bundles comprises 2 PRBs, 4 PRBs, or all PRBs allocated to the first signal.

As one embodiment, a PRB bundle is: the precoding granularity that the first node can assume in the frequency domain.

As one embodiment, a PRB bundle is one of a Precoding Resource Block Group (PRG) or PRBs allocated to the first signal.

As one embodiment, a PRB bundle is one of a Precoding Resource Block Group (PRG) or all PRBs allocated to the first signal.

As one embodiment, the target PRB bundle is one of a Precoding Resource Block Group (PRG) or PRBs allocated to the first signal.

As one embodiment, the target PRB bundle is one of a Precoding Resource Block Group (PRG) or all PRBs allocated to the first signal.

As one embodiment, the target PRB bundle is composed of consecutive PRBs in the frequency domain.

As one embodiment, the target PRB bundle is related to the precoding granularity assumed by the first node in the frequency domain.

As one embodiment, the number of PRBs included in the target PRB bundle is the same as the number of consecutive resource blocks included by in the precoding granularity assumed by the first node in the frequency domain.

As one embodiment, the first node can assume that the same precoding is applied to any of the PRBs in a PRB bundle.

As one embodiment, the first node cannot assume that the same precoding is applied to different PRB bundles.

As one embodiment, the first node can assume that the same precoding is applied to any of the PRBs in the target PRB bundle.

As one embodiment, the PRB occupied by the target PRB bundle is not at the edge of the first sub-band.

As one embodiment, the difference between the index of any PRB occupied by the target PRB bundle and the index of the PRB with the smallest index in the first sub-band is not less than 4.

As one embodiment, the difference between the index of the PRB with the largest index in the first sub-band and the index of any PRB occupied by the target PRB bundle is not less than 4.

As one embodiment, the first sub-band is a BWP (bandwidth part).

As one embodiment, the first sub-band is an active BWP.

As one embodiment, the first sub-band is a downlink BWP.

As one embodiment, the first sub-band is an uplink BWP.

As one embodiment, the first sub-band belongs to a BWP.

As one embodiment, the first sub-band includes a BWP.

As one embodiment, the first sub-band includes part of the PRBs in a BWP.

As one embodiment, the first sub-band belongs to an active BWP.

As one embodiment, the first sub-band includes an active BWP.

As one embodiment, the first sub-band includes part of the PRBs in an active BWP.

As one embodiment, the first sub-band belongs to a serving cell.

As one embodiment, the first sub-band is configurable.

As one embodiment, the number of the PRBs comprised in the first sub-band is: the size of the first sub-band.

As one embodiment, the first field in the first DCI format is used to indicate the at least 1 PRB bundle occupied by the first signal in the frequency domain.

As one embodiment, the first field in the first DCI format is used to indicate the frequency domain resource allocated to the first signal.

As one embodiment, the first field in the first DCI format is used to indicate the PRB allocated to the first signal.

As one embodiment, the statement that the number of PRBs comprised in the target PRB bundle is related to both the number of PRBs scheduled by the first DCI format and a target threshold includes: the number of PRBs scheduled by the first DCI format and a target threshold are both used to determine the number of PRBs comprised in the target PRB bundle.

As one embodiment, the statement that the number of PRBs comprised in the target PRB bundle is related to both the number of PRBs scheduled by the first DCI format and a target threshold includes: the number of PRBs scheduled by the first DCI format and a target threshold jointly indicate the number of PRBs comprised in the target PRB bundle.

As one embodiment, the statement that the number of PRBs comprised in the target PRB bundle is related to both the number of PRBs scheduled by the first DCI format and a target threshold includes: the size relationship between the number of PRBs scheduled by the first DCI format and a target threshold is used to determine the number of PRBs comprised in the target PRB bundle.

As one embodiment, the statement that the number of PRBs comprised in the target PRB bundle is related to both the number of PRBs scheduled by the first DCI format and a target threshold includes: the number of PRBs comprised in the target PRB bundle is related to the size relationship between the number of PRBs scheduled by the first DCI format and a target threshold.

As one embodiment, the statement that the number of PRBs comprised in the target PRB bundle is related to both the number of PRBs scheduled by the first DCI format and a target threshold includes: the number of PRBs comprised in the target PRB bundle depends on at least the number of PRBs scheduled by the first DCI format and a target threshold.

As one embodiment, the statement that the number of PRBs comprised in the target PRB bundle is related to both the number of PRBs scheduled by the first DCI format and a target threshold includes: the number of PRBs comprised in the target PRB bundle depends on the size relationship between at least the number of PRBs scheduled by the first DCI format and a target threshold.

As one embodiment, the statement that the number of PRBs comprised in the target PRB bundle is related to both the number of PRBs scheduled by the first DCI format and a target threshold includes:

when the PRBs scheduled by the first DCI format are consecutive and the number of PRBs scheduled by the first DCI format is greater than the target threshold, the number of PRBs comprised in the target PRB bundle is the same as the scheduled bandwidth; when the PRBs scheduled by the first DCI format are not consecutive or the number of PRBs scheduled by the first DCI format is not greater than the target threshold, the number of PRBs comprised in the target PRB bundle is equal to 2 or 4.

As one embodiment, the statement that the number of PRBs comprised in the target PRB bundle is related to both the number of PRBs scheduled by the first DCI format and a target threshold includes:

when the PRBs scheduled by the first DCI format are consecutive and the number of PRBs scheduled by the first DCI format is not greater than the target threshold, the number of PRBs comprised in the target PRB bundle is the same as the scheduled bandwidth; when the PRBs scheduled by the first DCI format are not consecutive or the number of PRBs scheduled by the first DCI format is greater than the target threshold, the number of PRBs comprised in the target PRB bundle is equal to 2 or 4.

As one embodiment, the statement that the number of PRBs comprised in the target PRB bundle is related to both the number of PRBs scheduled by the first DCI format and a target threshold includes:

when the PRBs scheduled by the first DCI format are consecutive and the number of PRBs scheduled by the first DCI format is less than the target threshold, the number of PRBs comprised in the target PRB bundle is the same as the scheduled bandwidth; when the PRBs scheduled by the first DCI format are not consecutive or the number of PRBs scheduled by the first DCI format is not less than the target threshold, the number of PRBs comprised in the target PRB bundle is equal to 2 or 4.

As one embodiment, the statement that the number of PRBs comprised in the target PRB bundle is related to both the number of PRBs scheduled by the first DCI format and a target threshold includes:

when the PRBs scheduled by the first DCI format are consecutive and the number of PRBs scheduled by the first DCI format is not less than the target threshold, the number of PRBs comprised in the target PRB bundle is the same as the scheduled bandwidth; when the PRBs scheduled by the first DCI format are not consecutive or the number of PRBs scheduled by the first DCI format is less than the target threshold, the number of PRBs comprised in the target PRB bundle is equal to 2 or 4.

As one embodiment, the PRBs scheduled by the first DCI format are consecutive.

As one embodiment, the statement that the number of PRBs comprised in the target PRB bundle is related to both the number of PRBs scheduled by the first DCI format and a target threshold includes:

when the number of the PRBs scheduled by the first DCI format is greater than the target threshold, the number of PRBs comprised in the target PRB bundle is the same as the scheduled bandwidth; when the number of PRBs scheduled by the first DCI format is not greater than the target threshold, the number of PRBs comprised in the target PRB bundle is equal to 2 or 4.

As one embodiment, the statement that the number of PRBs comprised in the target PRB bundle is related to both the number of PRBs scheduled by the first DCI format and a target threshold includes:

when the number of the PRBs scheduled by the first DCI format is not greater than the target threshold, the number of PRBs comprised in the target PRB bundle is the same as the scheduled bandwidth; when the number of PRBs scheduled by the first DCI format is greater than the target threshold, the number of PRBs comprised in the target PRB bundle is equal to 2 or 4.

As one embodiment, the statement that the number of PRBs comprised in the target PRB bundle is related to both the number of PRBs scheduled by the first DCI format and a target threshold includes:

when the number of the PRBs scheduled by the first DCI format is less than the target threshold, the number of PRBs comprised in the target PRB bundle is the same as the scheduled bandwidth; when the number of PRBs scheduled by the first DCI format is not less than the target threshold, the number of PRBs comprised in the target PRB bundle is equal to 2 or 4.

As one embodiment, the statement that the number of PRBs comprised in the target PRB bundle is related to both the number of PRBs scheduled by the first DCI format and a target threshold includes:

when the number of the PRBs scheduled by the first DCI format is not less than the target threshold, the number of PRBs comprised in the target PRB bundle is the same as the scheduled bandwidth; when the number of PRBs scheduled by the first DCI format is less than the target threshold, the number of PRBs comprised in the target PRB bundle is equal to 2 or 4.

As one embodiment, the statement that the number of PRBs comprised in the target PRB bundle is related to both the number of PRBs scheduled by the first DCI format and a target threshold includes:

when the number of the PRBs scheduled by the first DCI format is greater than the target threshold, the number of PRBs comprised in the target PRB bundle is the same as the scheduled bandwidth; when the number of PRBs scheduled by the first DCI format is not greater than the target threshold, the number of PRBs comprised in the target PRB bundle is less than the scheduled bandwidth.

As one embodiment, the statement that the number of PRBs comprised in the target PRB bundle is related to both the number of PRBs scheduled by the first DCI format and a target threshold includes:

when the number of the PRBs scheduled by the first DCI format is not greater than the target threshold, the number of PRBs comprised in the target PRB bundle is the same as the scheduled bandwidth; when the number of PRBs scheduled by the first DCI format is greater than the target threshold, the number of PRBs comprised in the target PRB bundle is less than the scheduled bandwidth.

As one embodiment, the statement that the number of PRBs comprised in the target PRB bundle is related to both the number of PRBs scheduled by the first DCI format and a target threshold includes:

when the number of the PRBs scheduled by the first DCI format is less than the target threshold, the number of PRBs comprised in the target PRB bundle is the same as the scheduled bandwidth; when the number of PRBs scheduled by the first DCI format is not less than the target threshold, the number of PRBs comprised in the target PRB bundle is less than the scheduled bandwidth.

As one embodiment, the statement that the number of PRBs comprised in the target PRB bundle is related to both the number of PRBs scheduled by the first DCI format and a target threshold includes:

when the number of the PRBs scheduled by the first DCI format is not less than the target threshold, the number of PRBs comprised in the target PRB bundle is the same as the scheduled bandwidth; when the number of PRBs scheduled by the first DCI format is less than the target threshold, the number of PRBs comprised in the target PRB bundle is less than the scheduled bandwidth.

As one embodiment, the scheduled bandwidth is represented by the number of PRBs.

As one embodiment, the scheduled bandwidth depends on the scheduling of the first DCI format.

As one embodiment, the scheduled bandwidth is the number of the PRBs scheduled by the first DCI format.

As one embodiment, the scheduled bandwidth is the number of PRBs occupied by the first signal.

As one embodiment, the scheduled bandwidth is the number of PRBs allocated to the first signal.

As one embodiment, the second value represents the size of a frequency domain resource.

As one embodiment, the second value represents the number of PRBs.

As one embodiment, the second value is a constant.

As one embodiment, the second value is a positive integer.

As one embodiment, the second value is a positive integer greater than 1.

As one embodiment, the first signal occupies at least 5 PRBs in the frequency domain.

As one embodiment, the first signal occupies at least 9 PRBs in the frequency domain.

As one embodiment, the first signal occupies at least 16 PRBs in the frequency domain.

As one embodiment, the resources allocated to the first signal are associated with the same TCI (Transmission Configuration Indicator) state or the same QCL (Quasi co-location) assumption.

As one embodiment, the statement that the second value is related to the capability of the receiver of the first DCI format includes: a UE capability information element transmitted by the first node is used to indicate the second value.

As one embodiment, the statement that the second value is related to the capability of the receiver of the first DCI format includes: based on a UE capability information element transmitted by the first node, the target threshold is equal to the ratio of a second value to 2.

As one embodiment, the statement that the second value is related to the capability of the receiver of the first DCI format includes: based on the UE capability reported by the first node, the target threshold is equal to the ratio of a second value to 2.

As one embodiment, the statement that the second value is related to the capability of the receiver of the first DCI format includes: the first node sends a target information block and the UE (User Equipment) capability information included in the target information block is used to indicate that the target threshold is equal to the ratio of the second value to 2.

As one embodiment, the statement that the second value is related to the capability of the receiver of the first DCI format includes: The second value is indicated by the UE capability information reported by the receiver of the first DCI format.

As one embodiment, the statement that the second value is related to the capability of the receiver of the first DCI format includes: The second value is indicated by the reported UE capability information.

As one embodiment, the statement that the second value is related to the capability of the receiver of the first DCI format includes:

the first node sends a target information block and the target information block includes UE capability information; based on the target information block, the second value is equal to a first default value; and the first default value is a positive constant.

As one embodiment, the statement that the second value is related to the capability of the receiver of the first DCI format includes: the second value is a value indicated by RRC signaling from a first value range and the first value range is determined based on the UE capability information reported by the receiver of the first DCI format.

As one embodiment, the statement that the second value is related to the capability of the receiver of the first DCI format includes: the second value is a value indicated by RRC signaling from a first value range and the first value range is indicated by the UE capability information reported by the receiver of the first DCI format.

As one embodiment, the statement that the second value is related to the capability of the receiver of the first DCI format includes:

the first node sends a first information block and then receives a second information block; wherein the first information block includes UE capability information; based on the first information block, the second information block is used to indicate the second value from a first value range.

As one embodiment, when the PRBs scheduled by the first DCI format are not consecutive or the number of the PRBs scheduled by the first DCI format is not greater than the target threshold, the target PRB bundle is a PRG.

As one embodiment, when the number of the PRBs scheduled by the first DCI format is not greater than the target threshold, the target PRB bundle is a PRG.

As one embodiment, the first node receives a first DCI format; wherein the first DCI format comprises a first field, the first field in the first DCI format is used for indicating frequency domain resource allocation, the size of the first field in the first DCI format is related to a first value, the first value is equal to the size of a first sub-band, and the first sub-band includes a plurality of consecutive PRBs; the target PRB bundle includes at least 1 PRB, the number of PRBs comprised in the target PRB bundle is related to both the number of PRBs scheduled by the first DCI format and a target threshold, the target threshold is equal to the ratio of a second value to 2, the first value is greater than the second value, and the second value is greater than 0.

## Embodiment 2

Embodiment 2 illustrates a schematic diagram according to one network architecture of the present application, as shown in FIG. 2.

FIG. 2 illustrates a network architecture 200 of a 5G NR, LTE (Long-Term Evolution), and LTE-A (Long-Term Evolution Advanced) system. The 5G NR or LTE network architecture 200 may be referred to as EPS (Evolved Packet System) 200 or some other suitable term. The EPS 200 may include one or more UE (User Equipment) 201, an NG-RAN (next generation wireless access network) 202, an EPC (Evolved Packet Core)/5G-CN (5G-Core Network) 210, an HSS (Home Subscriber Server, owned by the contracted user server) 220, and Internet service 230. The EPS may be interconnected with other access networks, but these entities/interfaces are not shown for simplicity. As shown in the figure, the EPS provides packet exchange services. However, it will be readily understood by those skilled in the art that various concepts presented throughout the present application can be extended to a network providing circuit exchange services. NG-RAN includes NR node B (gNB) 203 and other gNB 204. The gNB 203 provides user and control plane protocol termination towards the UE 201. The gNB 203 may be connected to the other gNB 204 via an Xn interface (e.g., backhaul). The gNB 203 may also be referred to as a base station, a base station transceiver, a radio base station, a radio transceiver, a transceiver function, a base service set (BSS), an extension service set (ESS), a TRP (transmitter receiver node), or some other suitable term. gNB203 provides access points to EPC/5G-CN 210 for UE 201. Embodiments of the UE 201 include cellular phones, smart phones, session initiation protocol (SIP) phones, laptop computers, personal digital assistants (PDA), satellite radios, non-ground base station communications, satellite mobile communications, global positioning systems, multimedia devices, video devices, digital audio players (e.g., MP3 players), cameras, game consoles, drones, aircrafts, narrow band Internet of Things devices, machine type communications devices, land vehicles, automobiles, wearable devices, or any other similar function devices. Those of ordinary skill in the art may also refer to the UE 201 as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handheld, a user agent, a mobile client, a client, or some other suitable term. The gNB 203 is connected to the EPC/5G-CN 210 via an S1/NG interface. The EPC/5G-CN 210 includes an MME (Mobility Management Entity)/AMF (Authentication Management Field)/UPF (User Plane Function) 211, another MME/AMF/UPF 214, an S-GW (Service Gateway) 212, and a P-GW (Packet Data Network Gateway) 213. MME/AMF/UPF 211 is a control node that handles signaling between UE 201 and EPC/5G-CN 210. Generally, the MME/AMF/UPF 211 provides carrier and connection management. All user IP (Internet Protocol) packets are transmitted via the S-GW 212, which is itself connected to the P-GW 213. The P-GW 213 provides UE IP address assignment along with other functions. The P-GW 213 is connected to the Internet service 230. The Internet service 230 includes an operator's corresponding Internet protocol service, which may include, inter alia, the Internet, an intranet, an IMS (IP Multimedia Subsystem), and a packet switching stream service.

As one embodiment, the UE 201 corresponds to the first node in the present application.

As one embodiment, the UE 201 corresponds to the second node in the present application.

As one embodiment, the UE 201 is a RedCap UE.

As one embodiment, the gNB 203 corresponds to the first node in the present application.

As one embodiment, the gNB 203 corresponds to the second node in the present application.

As one embodiment, the UE 201 corresponds to the first node in the present application and the gNB 203 corresponds to the second node in the present application.

As one embodiment, the gNB 203 is a macrocell.

As one embodiment, the gNB 203 is a microcell.

As one embodiment, the gNB 203 is a picocell.

As one embodiment, the gNB 203 is a femtocell.

As one embodiment, the gNB 203 is a base station device that supports large latency differences.

As one embodiment, the gNB 203 is a flying platform device.

As one embodiment, the gNB 203 is a satellite device.

As one embodiment, both the first and second nodes in the present application correspond to the UE 201, e.g., V2X communication is performed between the first node and the second node.

### Embodiment 3

Embodiment 3 illustrates a schematic diagram of an embodiment of a wireless protocol architecture for a user plane and a control plane according to one embodiment of the present application, as shown in FIG. 3. FIG. 3 is a schematic diagram illustrating an embodiment of a radio protocol architecture for a user plane 350 and a control plane 300. FIG. 3 shows, with three layers, a radio protocol architecture for a control plane 300 between a first communication node device (RSU in UE, gNB, or V2X) and a second communication node device (RSU in gNB, UE, or V2X) or between two UEs: layers 1, 2, and 3. The layer 1 (L1 layer) is the lowest layer and implements various PHY (physical layer) signal processing functions. The L1 layer will be referred to herein as PHY 301. The layer 2 (L2 layer) 305 is over the PHY 301 and is responsible for the link between the first communication node device and the second communication node device or between two UEs through the PHY 301. The L2 layer 305 includes a MAC (Medium Access Control) sublayer 302, an RLC (Radio Link Control) sublayer 303, and a PDCP (Packet Data Convergence Protocol) sublayer 304, and these sublayers terminate at the second communication node device. The PDCP sublayer 304 provides multiplexes between different radio carriers and logical channels. The PDCP sublayer 304 also provides security by encrypting the data packet and trans-regional movement support for the first communication node device between the second communication node device. The RLC sublayer 303 provides segmentation and reassembly of the upper layer data packet, retransmission of the missing data packet, and reordering of the data packet to compensate for out-of-order reception due to HARQ. The MAC sublayer 302 provides multiplex between logical and transmission channels. The MAC sublayer 302 is also responsible for distributing various radio resources (e.g., resource blocks) in one cell between the first communication node devices. The MAC sublayer 302 is also responsible for HARQ operations. The RRC (Radio Resource Control) sublayer 306 in layer 3 (L3 layer) in the control plane 300 is responsible for obtaining the radio resources (i.e., radio carrier) and configuring the lower layer using RRC signaling between the second communication node device and the first communication node device. The radio protocol architecture of the user plane 350 includes a layer 1 (L1 layer) and a layer 2 (L2 layer). The radio protocol architecture for the first and second communication node devices in the user plane 350 for the physical layer 351, the PDCP sublayer 354 in the L2 layer 355, the RLC sublayer 353 in the L2 layer 355, and the MAC sublayer 352 in the L2 layer 355 is substantially the same as the corresponding layer and the sublayer in the control plane 300. However, the PDCP sublayer 354 also provides header compression for upper layer data packets to reduce radio transmission overhead. The L2 layer 355 in the user plane 350 also includes an SDAP (Service Data Adaption Protocol) sublayer 356 that is responsible for mapping between QoS streams and data radio bearer (DRB) to support diversity of the business. Although not shown, the first communication node device may have several upper layers over the L2 layer 355, including a network layer (e.g., an IP layer) that terminates at the P-GW on the network side and an application layer that terminates at the other end of the connection (e.g., a far-end UE, a server, etc.).

As one embodiment, the wireless protocol architecture in FIG. 3 applies to the first node in the present application.

As one embodiment, the wireless protocol architecture in FIG. 3 applies to the second node in the present application.

As one embodiment, at least a portion of the first information block in the present application is generated in the RRC sublayer 306.

As one embodiment, at least a portion of the first information block in the present application is generated in the MAC sublayer 302.

As one embodiment, at least a portion of the first information block in the present application is generated in the MAC sublayer 352.

As one embodiment, at least a portion of the first information block in the present application is generated in the PHY 301.

As one embodiment, at least a portion of the first information block in the present application is generated in the PHY 351.

As one embodiment, at least a portion of the second information block in the present application is generated in the RRC sublayer 306.

As one embodiment, at least a portion of the second information block in the present application is generated in the MAC sublayer 302.

As one embodiment, at least a portion of the second information block in the present application is generated in the MAC sublayer 352.

As one embodiment, at least a portion of the second information block in the present application is generated in the PHY 301.

As one embodiment, at least a portion of the second information block in the present application is generated in the PHY 351.

As one embodiment, at least a portion of the target information block in the present application is generated in the RRC sublayer 306.

As one embodiment, at least a portion of the target information block in the present application is generated in the MAC sublayer 302.

As one embodiment, at least a portion of the target information block in the present application is generated in the MAC sublayer 352.

As one embodiment, at least a portion of the target information block in the present application is generated in the PHY 301.

As one embodiment, at least a portion of the target information block in the present application is generated in the PHY 351.

As one embodiment, the first DCI format in the present application is generated in the PHY 301.

As one embodiment, the first DCI format in the present application is generated in the PHY 351.

As one embodiment, the first signal in the present application is generated in the PHY 301.

As one embodiment, the first signal in the present application is generated in the PHY 351.

## Embodiment 4

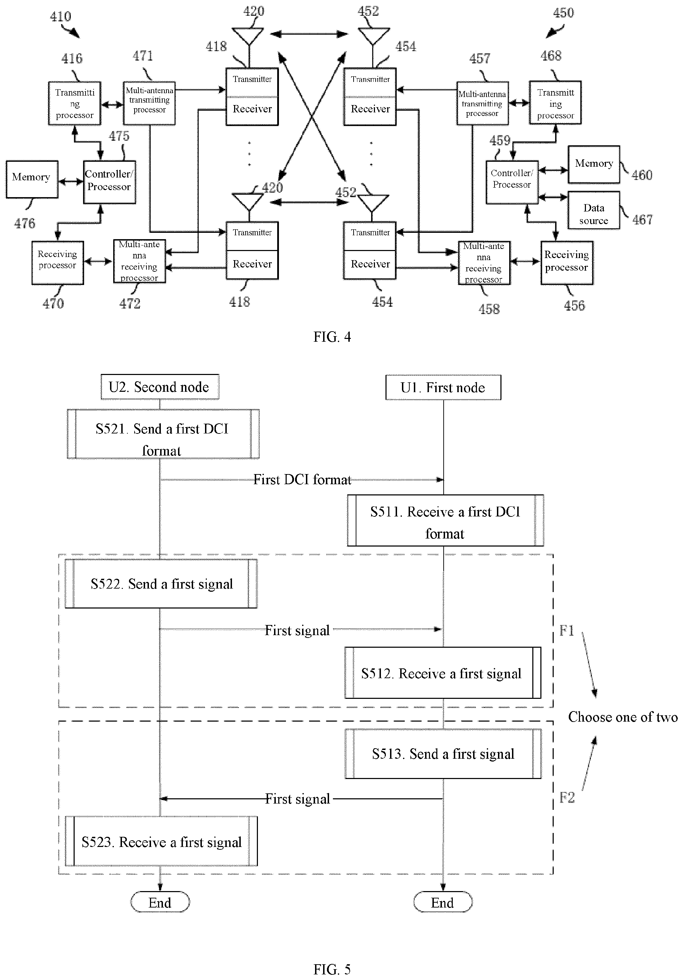

Embodiment 4 shows a schematic diagram of a first communications device and a second communications device according to the present application, as shown in FIG. 4. FIG. 4 is a block diagram of a first communications device 410 and a second communications device 450 in communication with one another over an access network.

The first communications device 410 includes a controller/processor 475, a memory 476, a receiving processor 470, a transmitting processor 416, a multi-antenna receiving processor 472, a multi-antenna transmitting processor 471, a transmitter/receiver 418, and an antenna 420.

The second communications device 450 includes a controller/processor 459, a memory 460, a data source 467, a transmitting processor 468, a receiving processor 456, a multi-antenna transmitting processor 457, a multi-antenna receiving processor 458, a transmitter/receiver 454, and an antenna 452.

In a transmission from the first communications device 410 to the second communications device 450, at the first communications device 410, an upper layer data packet from the core network is provided to the controller/processor 475. The controller/processor 475 implements the functionality of the L2 layer. In the transmission from the first communications device 410 to the first communications device 450, the controller/processor 475 provides header compression, encryption, packet segmentation and reordering, multiplexing between logical and transmission channels, and radio resource allocation to the second communications device 450 based on various priority measures. The controller/processor 475 is also responsible for retransmission of the lost package and signaling to the second communications device 450. The transmitting processor 416 and the multi-antenna transmission processor 471 implement various signal processing functions for the L1 layer (i.e., the physical layer). The transmitting processor 416 implements coding and interleaving to facilitate forward error correction (FEC) at the second communications device 450 as well as mapping of signal clusters based on various modulation schemes (e.g., bi-phase shift keying (BPSK), orthogonal phase shift keying (QPSK), M-phase shift keying (M-PSK), and M-quadrature amplitude modulation (M-QAM)). The multi-antenna transmitting processor 471 pre-codes encoded and modulated symbols in digital space, including codebook-based pre-coding and non-codebook-based pre-coding, and beam-forming processing to generate one or more spatial streams. The transmitting processor 416 then maps each spatial stream to the sub-carrier, multiplexes with a reference signal (e.g., frequency direct) in the time and/or frequency domain, and then uses an inverse fast Fourier transform (IFFT) to produce a physical channel that carries the time domain multi-carrier symbol flow. The multi-antenna transmitting processor 471 then sends the simulated pre-coding/beam-forming operation for the time domain multi-carrier symbol flow. Each transmitter 418 converts the baseband multi-carrier symbol flow provided by the multi-antenna transmitting processor 471 into a radio frequency flow, which is then provided to a different antenna 420.

In transmission from the first communications device 410 to the second communications device 450, at the second communications device 450, each receiver 454 receives a signal through its respective antenna 452. Each receiver 454 resumes information modulated onto a radio frequency carrier and converts the radio frequency flow into a baseband multi-carrier symbol flow to the receiving processor 456. The receiving processor 456 and the multi-antenna receiving processor 458 implement various signal processing functions of the L1 layer. The multi-antenna receiving processor 458 receives the simulated pre-coding/beam-forming operation for the baseband multi-carrier symbol flow from the receiver 454. The receiving processor 456 uses a Fast Fourier Transform (FFT) to transition the baseband multi-carrier symbol flow from the time domain to the frequency domain after receiving the simulated pre-coding/beam-forming operation. In the frequency domain, the physical layer data signal and the reference signal are demultiplexed by the receiving processor 456 where the reference signal is used for channel estimation and the data signal is detected by the multi-antenna receiving processor 458 to recover any spatial stream destined for the second communications device 450. The symbols on each spatial stream are demodulated and restored in the receiving processor 456 and generate a soft decision. The receiving processor 456 then decodes and de-interleaves the soft decision to resume the upper layer data and control signal transmitted by the first communications device 410 over the physical channel. The upper layer data and control signal are then provided to the controller/processor 459. The controller/processor 459 implements the functions of the L2 layer. The controller/processor 459 may be associated with a memory 460 that stores program code and data. The memory 460 may be referred to as a computer-readable medium. In transmission from the first communications device 410 to the second communications device 450, the controller/processor 459 provides demultiplexing between transmission and logical channels, packet reassembly, decryption, header decompression, and control signal processing to recover the upper layer data packet from the second communications device 450. The upper layer data packet is then provided to all protocol layers above the L2 layer. Various control signals may also be provided to L3 for L3 processing.

In transmission from the second communications device 450 to the first communications device 410, at the second communications device 450, the data source 467 is used to provide the upper layer data packet to the controller/processor 459. The data source 467 represents all protocol layers above the L2 layer. Similar to the transmission function at the first communications device 410 described in transmission from the first communications device 410 to the second communications device 450, the controller/processor 459 implements header compression, encryption, packet segmentation, and reordering, and multiplexing between logical and transmission channels based on wireless resource allocation, implementing L2 layer functions for the user plane and control plane. The controller/processor 459 is also responsible for retransmission of the lost package and signaling to the first communications device 410. The transmitting processor 468 executes modulation mapping and channel encoding and the multi-antenna transmitting processor 457 pre-encodes the digital multi-antenna space, including codebook-based pre-coding and non-codebook-based pre-coding, and beam-forming processing, and then the transmitting processor 468 modulates the resulting spatial stream into multi-carrier/single-carrier symbol flows, which, after simulated precoding/beam-forming operations in the multi-antenna transmitting processor 457, are then provided to a different antenna 452 via the transmitter 454. Each transmitter 454 first converts the baseband symbol flow provided by the multi-antenna transmitting processor 457 into a radio frequency symbol flow, which is then provided to the antenna 452.

In the transmission from the second communications device 450 to the first communications device 410, the function at the first communications device 410 is similar to the receiving function at the second communications device 450 described in the transmission from the first communications device 410 to the second communications device 450. Each receiver 418 receives a radio frequency signal through its respective antenna 420, converts the received radio frequency signal into a baseband signal, and provides the baseband signal to the multi-antenna receiving processor 472 and the receiving processor 470. The receiving processor 470 and the multi-antenna receiving processor 472 collectively implement the functions of the L1 layer. The controller/processor 475 implements the function of the L2 layer. The controller/processor 475 may be associated with the memory 476 storing program code and data. The memory 476 may be referred to as a computer-readable medium. In transmission from the second communications device 450 to the first communications device 410, the controller/processor 475 provides demultiplexing between transmission and logical channels, packet reassembly, decryption, header decompression, and control signal processing to recover the upper layer data packet from the UE 450. The upper layer data packet from the controller/processor 475 may be provided to the core network.

As one embodiment, the first node in the present application includes the second communications device 450 and the second node in the present application includes the first communications device 410.

As one sub-embodiment of the above embodiment, the first node is a user device and the second node is a user device.

As one sub-embodiment of the above embodiment, the first node is a user device and the second node is a relay node.

As one sub-embodiment of the above embodiment, the first node is a relay node and the second node is a user device.

As one sub-embodiment of the above embodiment, the first node is a user device and the second node is a base station device.

As one sub-embodiment of the above embodiment, the first node is a relay node and the second node is a base station device.

As one sub-embodiment of the above embodiment, the second node is a user device and the first node is a base station device.

As one sub-embodiment of the above embodiment, the second node is a relay node and the first node is a base station device.

As one sub-embodiment of the above embodiment, the second communications device 450 includes: at least one controller/processor; the at least one controller/processor is responsible for HARQ operation.

As one sub-embodiment of the above embodiment, the first communications device 410 includes: at least one controller/processor; the at least one controller/processor is responsible for HARQ operation.

As one sub-embodiment of the above embodiment, the first communications device 410 includes: at least one controller/processor; the at least one controller/processor is responsible for error detection using a positive acknowledgement (ACK) and/or negative acknowledgement (NACK) protocol to support HARQ operation.

As one embodiment, the second communications device 450 includes: at least one processor, and at least one memory comprising computer program code; the at least one memory and the computer program code configured for use with the at least one processor. The second communications device 450 device at least: receives a first DCI format; operates a first signal, the first signal occupies at least 1 PRB bundle in a frequency domain, any PRB bundle occupied by the first signal in the frequency domain belongs to a first sub-band, the first sub-band comprises a plurality of consecutive PRBs, and a first value is equal to the number of PRBs comprised in the first sub-band; wherein the first DCI format comprises a first field, the first field in the first DCI format is used for indicating a frequency domain resource occupied by the first signal, and the size of the first field in the first DCI format is related to the first value; a target PRB bundle is 1 PRB bundle occupied by the first signal in the frequency domain, the target PRB bundle comprises at least 1 PRB, the number of PRBs comprised in the target PRB bundle is related to both the number of PRBs scheduled by the first DCI format and a target threshold, and the target threshold is equal to the ratio of a second value to 2; and the second value is related to the capability of the receiver of the first DCI format and the first value is greater than the second value.

As one sub-embodiment of the above embodiment, the second communications device 450 corresponds to the first node in the present application.

As one embodiment, the second communications device 450 includes: a memory storing a computer-readable instruction program that, when executed by at least one processor, generates an action, the action comprising: receives a first DCI format; operates a first signal, the first signal occupies at least 1 PRB bundle in a frequency domain, any PRB bundle occupied by the first signal in the frequency domain belongs to a first sub-band, the first sub-band comprises a plurality of consecutive PRBs, and a first value is equal to the number of PRBs comprised in the first sub-band; wherein the first DCI format comprises a first field, the first field in the first DCI format is used for indicating a frequency domain resource occupied by the first signal, and the size of the first field in the first DCI format is related to the first value; a target PRB bundle is 1 PRB bundle occupied by the first signal in the frequency domain, the target PRB bundle comprises at least 1 PRB, the number of PRBs comprised in the target PRB bundle is related to both the number of PRBs scheduled by the first DCI format and a target threshold, and the target threshold is equal to the ratio of a second value to 2; and the second value is related to the capability of the receiver of the first DCI format and the first value is greater than the second value.

As one sub-embodiment of the above embodiment, the second communications device 450 corresponds to the first node in the present application.

As one embodiment, the first communications device 410 includes: at least one processor, and at least one memory comprising computer program code; the at least one memory and the computer program code configured for use with the at least one processor. The first communications device 410 device at least: sends a first DCI format; operates a first signal, the first signal occupies at least 1 PRB bundle in a frequency domain, any PRB bundle occupied by the first signal in the frequency domain belongs to a first sub-band, the first sub-band comprises a plurality of consecutive PRBs, and a first value is equal to the number of PRBs comprised in the first sub-band; wherein the first DCI format comprises a first field, the first field in the first DCI format is used for indicating a frequency domain resource occupied by the first signal, and the size of the first field in the first DCI format is related to the first value; a target PRB bundle is 1 PRB bundle occupied by the first signal in the frequency domain, the target PRB bundle comprises at least 1 PRB, the number of PRBs comprised in the target PRB bundle is related to both the number of PRBs scheduled by the first DCI format and a target threshold, and the target threshold is equal to the ratio of a second value to 2; and the second value is related to the capability of the receiver of the first DCI format and the first value is greater than the second value.

As one sub-embodiment of the above embodiment, the first communications device 410 corresponds to the second node in the present application.

As one embodiment, the first communications device 410 includes: a memory storing a computer-readable instruction program that, when executed by at least one processor, generates an action, the action comprising: sends a first DCI format; operates a first signal, the first signal occupies at least 1 PRB bundle in a frequency domain, any PRB bundle occupied by the first signal in the frequency domain belongs to a first sub-band, the first sub-band comprises a plurality of consecutive PRBs, and a first value is equal to the number of PRBs comprised in the first sub-band; wherein the first DCI format comprises a first field, the first field in the first DCI format is used for indicating a frequency domain resource occupied by the first signal, and the size of the first field in the first DCI format is related to the first value; a target PRB bundle is 1 PRB bundle occupied by the first signal in the frequency domain, the target PRB bundle comprises at least 1 PRB, the number of PRBs comprised in the target PRB bundle is related to both the number of PRBs scheduled by the first DCI format and a target threshold, and the target threshold is equal to the ratio of a second value to 2; and the second value is related to the capability of the receiver of the first DCI format and the first value is greater than the second value.

As one sub-embodiment of the above embodiment, the first communications device 410 corresponds to the second node in the present application.

As one embodiment, at least one of {the antenna 452, the receiver 454, the multi-antenna receiving processor 458, the receiving processor 456, the controller/processor 459, the memory 460, and the data source 467} is used to receive the second information block in the present application.

As one embodiment, at least one of {the antenna 420, the transmitter 418, the multi-antenna transmitting processor 471, the transmitting processor 416, the controller/processor 475, and the memory 476} is used to send the second information block in the present application.

As one embodiment, at least one of {the antenna 452, the transmitter 454, the multi-antenna transmitting processor 458, the transmitting processor 468, the controller/processor 459, the memory 460, and the data source 467} is used to send the first information block in the present application.

As one embodiment, at least one of {the antenna 420, the receiver 418, the multi-antenna receiving processor 472, the receiving processor 470, the controller/processor 475, and the memory 476} is used to receive the first information block in the present application.

As one embodiment, at least one of {the antenna 452, the transmitter 454, the multi-antenna transmitting processor 458, the transmitting processor 468, the controller/processor 459, the memory 460, and the data source 467} is used to send the target information block in the present application.

As one embodiment, at least one of {the antenna 420, the receiver 418, the multi-antenna receiving processor 472, the receiving processor 470, the controller/processor 475, and the memory 476} is used to receive the target information block in the present application.

As one embodiment, at least one of {the antenna 452, the receiver 454, the multi-antenna receiving processor 458, the receiving processor 456, the controller/processor 459, the memory 460, and the data source 467} is used to receive the first DCI format in the present application.

As one embodiment, at least one of {the antenna 420, the transmitter 418, the multi-antenna transmitting processor 471, the transmitting processor 416, the controller/processor 475, and the memory 476} is used to send the first DCI format in the present application.

As one embodiment, at least one of {the antenna 452, the transmitter 454, the multi-antenna transmitting processor 458, the transmitting processor 468, the controller/processor 459, the memory 460, and the data source 467} is used to operate the first signal in the present application.

As one embodiment, at least one of {the antenna 420, the receiver 418, the multi-antenna receiving processor 472, the receiving processor 470, the controller/processor 475, and the memory 476} is used to operate the first signal in the present application.

As one embodiment, at least one of {the antenna 452, the receiver 454, the multi-antenna receiving processor 458, the receiving processor 456, the controller/processor 459, the memory 460, and the data source 467} is used to operate the first signal in the present application.

As one embodiment, at least one of {the antenna 420, the transmitter 418, the multi-antenna transmitting processor 471, the transmitting processor 416, the controller/processor 475, and the memory 476} is used to operate the first signal in the present application.

As one embodiment, the second communications device 450 includes: at least one processor, and at least one memory comprising computer program code; the at least one memory and the computer program code configured for use with the at least one processor. The second communications device 450 device at least: receives a first DCI format; operates a first signal, the first signal occupies at least 1 PRB bundle in a frequency domain, any PRB bundle occupied by the first signal in the frequency domain belongs to a first sub-band, the first sub-band comprises a plurality of consecutive PRBs, and a first value is equal to the number of PRBs comprised in the first sub-band; wherein the first DCI format comprises a first field, the first field in the first DCI format is used for indicating a frequency domain resource occupied by the first signal, and the size of the first field in the first DCI format is related to the first value; a target PRB bundle is 1 PRB bundle occupied by the first signal in the frequency domain, the target PRB bundle comprises at least 1 PRB, the number of PRBs comprised in the target PRB bundle is related to both the number of PRBs scheduled by the first DCI format and a target threshold, the target threshold is equal to the ratio of a second value to 2, the second value is a positive integer, the second value is a constant or indicated by higher layer signaling, and the first value is not equal to the second value.

As one sub-embodiment of the above embodiment, the second communications device 450 corresponds to the first node in the present application.

As one embodiment, the second communications device 450 includes: a memory storing a computer-readable instruction program that, when executed by at least one processor, generates an action, the action comprising: receives a first DCI format; operates a first signal, the first signal occupies at least 1 PRB bundle in a frequency domain, any PRB bundle occupied by the first signal in the frequency domain belongs to a first sub-band, the first sub-band comprises a plurality of consecutive PRBs, and a first value is equal to the number of PRBs comprised in the first sub-band; wherein the first DCI format comprises a first field, the first field in the first DCI format is used for indicating a frequency domain resource occupied by the first signal, and the size of the first field in the first DCI format is related to the first value; a target PRB bundle is 1 PRB bundle occupied by the first signal in the frequency domain, the target PRB bundle comprises at least 1 PRB, the number of PRBs comprised in the target PRB bundle is related to both the number of PRBs scheduled by the first DCI format and a target threshold, the target threshold is equal to the ratio of a second value to 2, the second value is a positive integer, the second value is a constant or indicated by higher layer signaling, and the first value is not equal to the second value.

As one sub-embodiment of the above embodiment, the second communications device 450 corresponds to the first node in the present application.

As one embodiment, the first communications device 410 includes: at least one processor, and at least one memory comprising computer program code; the at least one memory and the computer program code configured for use with the at least one processor. The first communications device 410 device at least: sends a first DCI format; operates a first signal, the first signal occupies at least 1 PRB bundle in a frequency domain, any PRB bundle occupied by the first signal in the frequency domain belongs to a first sub-band, the first sub-band comprises a plurality of consecutive PRBs, and a first value is equal to the number of PRBs comprised in the first sub-band; wherein the first DCI format comprises a first field, the first field in the first DCI format is used for indicating a frequency domain resource occupied by the first signal, and the size of the first field in the first DCI format is related to the first value; a target PRB bundle is 1 PRB bundle occupied by the first signal in the frequency domain, the target PRB bundle comprises at least 1 PRB, the number of PRBs comprised in the target PRB bundle is related to both the number of PRBs scheduled by the first DCI format and a target threshold, the target threshold is equal to the ratio of a second value to 2, the second value is a positive integer, the second value is a constant or indicated by higher layer signaling, and the first value is not equal to the second value.

As one sub-embodiment of the above embodiment, the first communications device 410 corresponds to the second node in the present application.

As one embodiment, the first communications device 410 includes: a memory storing a computer-readable instruction program that, when executed by at least one processor, generates an action, the action comprising: sends a first DCI format; operates a first signal, the first signal occupies at least 1 PRB bundle in a frequency domain, any PRB bundle occupied by the first signal in the frequency domain belongs to a first sub-band, the first sub-band comprises a plurality of consecutive PRBs, and a first value is equal to the number of PRBs comprised in the first sub-band; wherein the first DCI format comprises a first field, the first field in the first DCI format is used for indicating a frequency domain resource occupied by the first signal, and the size of the first field in the first DCI format is related to the first value; a target PRB bundle is 1 PRB bundle occupied by the first signal in the frequency domain, the target PRB bundle comprises at least 1 PRB, the number of PRBs comprised in the target PRB bundle is related to both the number of PRBs scheduled by the first DCI format and a target threshold, the target threshold is equal to the ratio of a second value to 2, the second value is a positive integer, the second value is a constant or indicated by higher layer signaling, and the first value is not equal to the second value.

As one sub-embodiment of the above embodiment, the first communications device 410 corresponds to the second node in the present application.

As one embodiment, the second communications device 450 includes: at least one processor, and at least one memory comprising computer program code; the at least one memory and the computer program code configured for use with the at least one processor. The second communications device 450 device at least: receives a first DCI format; wherein the first DCI format comprises a first field, the first field in the first DCI format is used for indicating frequency domain resource allocation, the size of the first field in the first DCI format is related to a first value, the first value is equal to the size of a first sub-band, and the first sub-band includes a plurality of consecutive PRBs; the target PRB bundle includes at least 1 PRB, the number of PRBs comprised in the target PRB bundle is related to both the number of PRBs scheduled by the first DCI format and a target threshold, the target threshold is equal to the ratio of a second value to 2, the first value is greater than the second value, and the second value is greater than 0.

As one sub-embodiment of the above embodiment, the second communications device 450 corresponds to the first node in the present application.

As one embodiment, the second communications device 450 includes: a memory storing a computer-readable instruction program that, when executed by at least one processor, generates an action, the action comprising: receives a first DCI format; wherein the first DCI format comprises a first field, the first field in the first DCI format is used for indicating frequency domain resource allocation, the size of the first field in the first DCI format is related to a first value, the first value is equal to the size of a first sub-band, and the first sub-band includes a plurality of consecutive PRBs; the target PRB bundle includes at least 1 PRB, the number of PRBs comprised in the target PRB bundle is related to both the number of PRBs scheduled by the first DCI format and a target threshold, the target threshold is equal to the ratio of a second value to 2, the first value is greater than the second value, and the second value is greater than 0.

As one sub-embodiment of the above embodiment, the second communications device 450 corresponds to the first node in the present application.

As one embodiment, the first communications device 410 includes: at least one processor, and at least one memory comprising computer program code; the at least one memory and the computer program code configured for use with the at least one processor. The first communications device 410 device at least: sends a first DCI format; wherein the first DCI format comprises a first field, the first field in the first DCI format is used for indicating frequency domain resource allocation, the size of the first field in the first DCI format is related to a first value, the first value is equal to the size of a first sub-band, and the first sub-band includes a plurality of consecutive PRBs; the target PRB bundle includes at least 1 PRB, the number of PRBs comprised in the target PRB bundle is related to both the number of PRBs scheduled by the first DCI format and a target threshold, the target threshold is equal to the ratio of a second value to 2, the first value is greater than the second value, and the second value is greater than 0.

As one sub-embodiment of the above embodiment, the first communications device 410 corresponds to the second node in the present application.

As one embodiment, the first communications device 410 includes: a memory storing a computer-readable instruction program that, when executed by at least one processor, generates an action, the action comprising: sends a first DCI format; wherein the first DCI format comprises a first field, the first field in the first DCI format is used for indicating frequency domain resource allocation, the size of the first field in the first DCI format is related to a first value, the first value is equal to the size of a first sub-band, and the first sub-band includes a plurality of consecutive PRBs; the target PRB bundle includes at least 1 PRB, the number of PRBs comprised in the target PRB bundle is related to both the number of PRBs scheduled by the first DCI format and a target threshold, the target threshold is equal to the ratio of a second value to 2, the first value is greater than the second value, and the second value is greater than 0.

As one sub-embodiment of the above embodiment, the first communications device 410 corresponds to the second node in the present application.

## Embodiment 5

Embodiment 5 illustrates a flow chart of signal transmission according to one embodiment of the present application, as shown in FIG. 5. In FIG. 5, the first node U1 and the second node U2 communicate with each other via an air interface. In particular, only one of the step in the dashed box F1 and the step in the dashed box F2 is present.

The first node U1 receives the first DCI format in step S511; and receives the first signal in step S512, or alternatively, sends the first signal in step S513.

The second node U2 sends the first DCI format in step S521; and sends the first signal in step S522, or alternatively, receives the first signal in step S523.

In Embodiment 5, the first signal occupies at least 1 PRB bundle in the frequency domain, any PRB bundle occupied by the first signal in the frequency domain belongs to a first sub-band, the first sub-band includes multiple consecutive PRBs, and the first value is equal to the number of PRBs included in the first sub-band; the first DCI format includes a first field, the first field in the first DCI format is used to indicate the frequency domain resources occupied by the first signal, and the size of the first field in the first DCI format is related to the first value; the target PRB bundle is 1 PRB bundle occupied by the first signal in the frequency domain, the target PRB bundle includes at least 1 PRB, the number of PRBs included in the target PRB bundle is related to both the number of PRBs scheduled by the first DCI format and the target threshold, and the target threshold is equal to the ratio of a second value to 2; the second value is related to the capability of the receiver of the first DCI format and the first value is greater than the second value; the first sub-band is an active BWP; when the PRBs scheduled by the first DCI format are consecutive and the number of the PRBs scheduled by the first DCI format is greater than the target threshold, the number of the PRBs included in the target PRB bundle is the same as the scheduled bandwidth; when the PRBs scheduled by the first DCI format are not consecutive or the number of the PRBs scheduled by the first DCI format is not greater than the target threshold, the number of the PRBs included in the target PRB bundle is equal to 2 or 4; the first DCI format includes a second field and the second field in the first DCI format is set to 1; the first value set includes 2 values and the first value set is configurable; a first reference value is one of the 2 values included in the first value set and the first reference value is configured as one of 2 or 4; when the PRBs scheduled by the first DCI format are not consecutive or the number of the PRBs scheduled by the first DCI format is not greater than the target threshold, the number of the PRBs included in the target PRB bundle is equal to the first reference value.

As one sub-embodiment of Embodiment 5, the first field in the first DCI format includes a first resource indication value, the first resource indication value is related to the first value, and the first resource indication value is used to indicate a frequency domain resource occupied by the first signal.

As one sub-embodiment of Embodiment 5, the first field in the first DCI format is used to indicate the RBGs allocated to the first signal in the first resource block group set and the total number of RBGs comprised in the first resource block group set is associated with the first value.

As one embodiment, the first node U1 is the first node in the present application.

As one embodiment, the second node U2 is the second node in the present application.

As one embodiment, the first node U1 is a UE.

As one embodiment, the first node U1 is a base station.

As one embodiment, the second node U2 is a base station.

As one embodiment, the second node U2 is a UE.

As one embodiment, the air interface between the second node U2 and the first node U1 is a Uu interface.

As one embodiment, the air interface between the second node U2 and the first node U1 includes a cellular link.

As one embodiment, the air interface between the second node U2 and the first node U1 is a PC5 interface.

As one embodiment, the air interface between the second node U2 and the first node U1 includes a sidelink.

As one embodiment, the air interface between the second node U2 and the first node U1 includes a wireless interface between a base station device and a user device.

As one embodiment, the air interface between the second node U2 and the first node U1 includes a wireless interface between a satellite device and a user device.

As one embodiment, the air interface between the second node U2 and the first node U1 includes a wireless interface between a user device and a user device.

As one embodiment, issues to be addressed by the present application include: improving the system's transmission performance.

As one embodiment, issues to be addressed by the present application include: determining the number of PRBs included in the target PRB bundle.

As one embodiment, issues to be addressed by the present application include: determining based on UE capability the number of PRBs included in the target PRB bundle.

As one embodiment, issues to be addressed by the present application include: optimizing the size of the first field in the first DCI format.

As one embodiment, issues to be addressed by the present application include: allocating resources to RedCap UE.

As one embodiment, issues to be addressed by the present application include: allocating resources to UEs with high processing power.

As one embodiment, issues to be addressed by the present application include: allocating resources to UEs that support XR (Extended Reality) services.

As one embodiment, issues to be addressed by the present application include: allocating resources to UEs in Internet of Vehicles/V2X scenarios.

As one embodiment, issues to be addressed by the present application include: reasonably allocating resources in radio frequency bandwidth and baseband bandwidth based on UE capability.

As one embodiment, issues to be addressed by the present application include: optimizing the trade-off between precoding flexibility and channel estimation.

As one embodiment, issues to be addressed by the present application include: adapting effective resource allocation methods according to UE capability.

As one embodiment, the step in the dashed box F1 is present and the step in the dashed box F2 is not present.

As one embodiment, the step in the dashed box F1 is not present and the step in the dashed box F2 is present.

## Embodiment 6

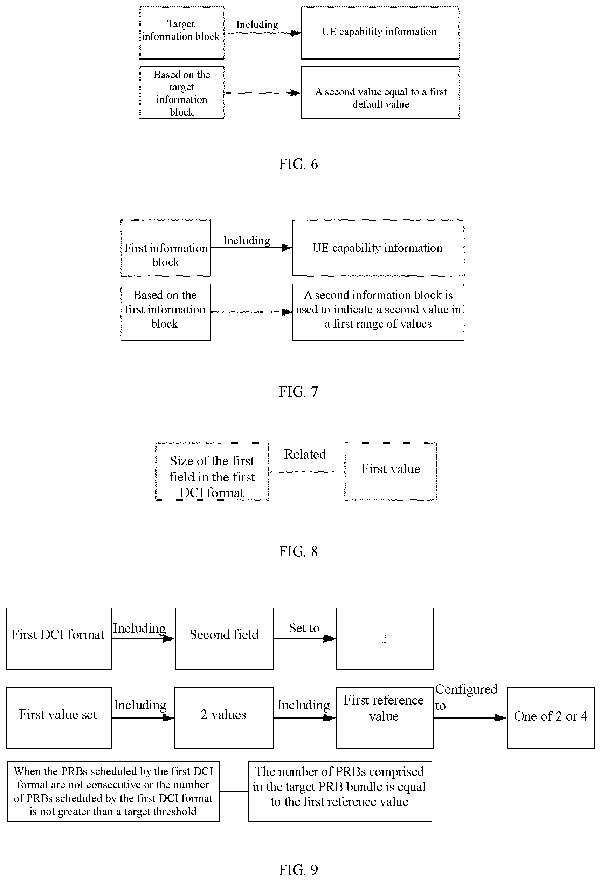

Embodiment 6 illustrates a schematic diagram of a relationship between a target information block, a second value, and a first default value according to one embodiment of the present application, as shown in FIG. 6.

In Embodiment 6, the first node in the present application sends a target information block and the target information block includes UE capability information; based on the target information block, the second value is equal to a first default value; and the first default value is a positive constant.

As one embodiment, the statement that the target information block includes UE capability information includes: the target information block includes at least one UE capability information element.

As one embodiment, the name of the target information block includes RedCap.

As one embodiment, the name of the UE capability information element included in the target information block includes RedCap.

As one embodiment, the target information block is used to indicate the UE capabilities supported by RedCap UE (a UE with reduced capabilities).

As one embodiment, the target information block is physical layer signaling.

As one embodiment, the target information block includes physical layer signaling.

As one embodiment, the target information block is downlink control signaling.

As one embodiment, the target information block is dynamically configured.

As one embodiment, the target information block includes layer 1 (L1) signaling.

As one embodiment, the target information block includes layer 1 (L1) control signaling.

As one embodiment, the target information block includes one or more fields in one physical layer signaling.

As one embodiment, the target information block includes higher layer signaling.

As one embodiment, the target information block includes one or more fields in one higher layer signaling.

As one embodiment, the target information block includes RRC (Radio Resource Control) signaling.

As one embodiment, the target information block includes MAC CE (Medium Access Control layer Control Element).

As one embodiment, the target information block includes one or more fields in one RRC signaling.

As one embodiment, the target information block includes one or more fields **in** one MAC CE.

As one embodiment, the target information block includes one or more fields of one IE (Information Element).

As one embodiment, the first default value is 7.

As one embodiment, the first default value is 8.

As one embodiment, the first default value is 9.

As one embodiment, the first default value is 10.

As one embodiment, the first default value is 11.

As one embodiment, the first default value is 12.

As one embodiment, the first default value is 13.

As one embodiment, the first default value is 21.

As one embodiment, the first default value is 22.

As one embodiment, the first default value is 23.

As one embodiment, the first default value is 24.

As one embodiment, the first default value is 25.

As one embodiment, the first default value is 26.

As one embodiment, the first default value is 27.

As one embodiment, the first default value is not greater than the total number of PRBs included **in** the 1M bandwidth.

As one embodiment, the first default value is not greater than the total number of PRBs included **in** the 2M bandwidth.

As one embodiment, the first default value is not greater than the total number of PRBs included **in** the 3M bandwidth.

As one embodiment, the first default value is not greater than the total number of PRBs included **in** the 4M bandwidth.

As one embodiment, the first default value is not greater than the total number of PRBs included **in** the 5M bandwidth.

As one embodiment, the first default value is not greater than the total number of PRBs included **in** the 10M bandwidth.

As one embodiment, the first default value is not greater than the total number of PRBs included **in** the 20M bandwidth.

As one embodiment, the first default value is not greater than the total number of PRBs included in the 100M bandwidth.

As one embodiment, the target information block is sent before the first DCI format is received.

**Embodiment 7**

Embodiment 7 illustrates a schematic diagram of a relationship between a first information block, a second information block, a first range of values, and a second value according to one embodiment of the present application, as shown in FIG. 7.

In Embodiment 7, the first node in the present application sends a first information block and then receives a second information block; wherein the first information block includes UE capability information; based on the first information block, the second information block is used to indicate the second value from a first value range.

As one embodiment, the statement that the first information block includes UE capability information includes: The first information block includes at least one UE capability information element.

As one embodiment, the name of the first information block includes RedCap.

As one embodiment, the name of the UE capability information element included **in** the first information block includes RedCap.

As one embodiment, the first information block is used to indicate the UE capabilities supported by RedCap UE (a UE with reduced capabilities).

As one embodiment, the first information block is physical layer signaling.

As one embodiment, the first information block includes physical layer signaling.

As one embodiment, the first information block is downlink control signaling.

As one embodiment, the first information block is dynamically configured.

As one embodiment, the first information block includes layer 1 (L1) signaling.

As one embodiment, the first information block includes layer 1 (L1) control signaling.

As one embodiment, the first information block includes one or more fields **in** one physical layer signaling.

As one embodiment, the first information block includes higher layer signaling.

As one embodiment, the first information block includes one or more fields in one higher layer signaling.

As one embodiment, the first information block includes RRC (Radio Resource Control) signaling.

As one embodiment, the first information block includes MAC CE (Medium Access Control layer Control Element).

As one embodiment, the first information block includes one or more fields in one RRC signaling.

As one embodiment, the first information block includes one or more fields in one MAC CE.

As one embodiment, the first information block includes one or more fields of one IE (Information Element).

As one embodiment, the name of the second information block includes RedCap.

As one embodiment, the name of the information element included in the second information block includes RedCap.

As one embodiment, the second information block is for RedCap UE.

As one embodiment, the second information block is physical layer signaling.

As one embodiment, the second information block includes physical layer signaling.

As one embodiment, the second information block is downlink control signaling.

As one embodiment, the second information block is dynamically configured.

As one embodiment, the second information block includes layer 1 (L1) signaling.

As one embodiment, the second information block includes layer 1 (L1) control signaling.

As one embodiment, the second information block includes one or more fields in one physical layer signaling.

As one embodiment, the second information block includes higher layer signaling.

As one embodiment, the second information block includes one or more fields in one higher layer signaling.

As one embodiment, the second information block includes RRC (Radio Resource Control) signaling.

As one embodiment, the second information block includes MAC CE (Medium Access Control layer Control Element).

As one embodiment, the second information block includes one or more fields in one RRC signaling.

As one embodiment, the second information block includes one or more fields in one MAC CE.

As one embodiment, the second information block includes one or more fields of one IE (Information Element).

As one embodiment, the statement based on the first information block includes: The reception of the first information block at the sending end of the second information block is used to trigger the sending of the second information block.

As one embodiment, the statement based on the first information block includes: The first information block is used to indicate the first value range.

As one embodiment, the statement based on the first information block includes: The first information block is used to report the first value range.

As one embodiment, the first value range includes a plurality of values.

As one embodiment, the first value range includes a plurality of positive integers.

As one embodiment, the first value range is default.

As one embodiment, the first value range is predefined.

As one embodiment, the maximum value in the first value range is 7.

As one embodiment, the maximum value in the first value range is 8.

As one embodiment, the maximum value in the first value range is 9.

As one embodiment, the maximum value in the first value range is 10.

As one embodiment, the maximum value in the first value range is 11.

As one embodiment, the maximum value in the first value range is 12.

As one embodiment, the maximum value in the first value range is 13.

As one embodiment, the maximum value in the first value range is 21.

As one embodiment, the maximum value in the first value range is 22.

As one embodiment, the maximum value in the first value range is 23.

As one embodiment, the maximum value in the first value range is 24.

As one embodiment, the maximum value in the first value range is 25.

As one embodiment, the maximum value in the first value range is 26.

As one embodiment, the maximum value in the first value range is 27.

As one embodiment, the maximum value in the first valve range is not greater than the total number of PRBs included in the 1M bandwidth.

As one embodiment, the maximum value in the first valve range is not greater than the total number of PRBs included in the 2M bandwidth.

As one embodiment, the maximum value in the first valve range is not greater than the total number of PRBs included in the 3M bandwidth.

As one embodiment, the maximum value in the first valve range is not greater than the total number of PRBs included in the 4M bandwidth.

As one embodiment, the maximum value in the first valve range is not greater than the total number of PRBs included in the 5M bandwidth.

As one embodiment, the maximum value in the first valve range is not greater than the total number of PRBs included in the 10M bandwidth.

As one embodiment, the maximum value in the first valve range is not greater than the total number of PRBs included in the 20M bandwidth.

As one embodiment, the maximum value in the first valve range is not greater than the total number of PRBs included in the 100M bandwidth.

As one embodiment, the first information block is sent before the first DCI format is received.

As one embodiment, the second information block is sent before the first DCI format is received.

### Embodiment 8

Embodiment 8 illustrates a schematic diagram of a relationship between the size of a first field in a first DCI format and a first value according to one embodiment of the present application, as shown in FIG. 8.

In Embodiment 8, the size of the first field in the first DCI format is related to the first value.

As one embodiment, the first field includes at least one bit.

As one embodiment, the first field is a frequency domain resource assignment field.

As one embodiment, the first field is used to indicate frequency domain resource allocation.

As one embodiment, the size of the first field in the first DCI format refers to: the number of bits included in the first field in the first DCI format.

As one embodiment, the first value is used to determine the size of the first field in the first DCI format.

As one embodiment, the first value is used to indicate the size of the first field in the first DCI format.

As one embodiment, the first value explicitly indicates the size of the first field in the first DCI format.

As one embodiment, the first value implicitly indicates the size of the first field in the first DCI format.

As one embodiment, the first value is used to perform a calculation to obtain the size of the first field in the first DCI format.

As one embodiment, the size of the first field in the first DCI format is equal to $\left\lceil \log_2(N_{RB}^{DL,BWP}(N_{RB}^{DL,BWP}+1)/2) \right\rceil$, where the $N_{RB}^{DL,BWP}$ is equal to the first value.

As one embodiment, the size of the first field in the first DCI format is less than $\left\lceil \log_2(N_{RB}^{DL,BWP}(N_{RB}^{DL,BWP}+1)/2) \right\rceil$, where the $N_{RB}^{DL,BWP}$ is equal to the first value.

As one embodiment, resource allocation type 1 is configured for the first node.

As one embodiment, the size of the first field in the first DCI format is equal to

$$\max \left( \left\lceil \log_2 (N_{RB}^{DL,BWP} (N_{RB}^{DL,BWP} + 1)/2) \right\rceil , N_{RBG} \right) + 1$$ , where the $N_{RB}^{DL,BWP}$ is equal to the first value and the $N_{RBG}$ represents the total number of resource block groups of 1 BWP.

As one embodiment, the size of the first field in the first DCI format is smaller than

$$\max \left( \left\lceil \log_2 (N_{RB}^{DL,BWP} (N_{RB}^{DL,BWP} + 1)/2) \right\rceil , N_{RBG} \right) + 1$$ , where the $N_{RB}^{DL,BWP}$ is equal to the first value and the $N_{RBG}$ represents the total number of resource block groups of 1 BWP.

As one embodiment, whether resource allocation type 0 (resource allocation type 0) or resource allocation type 1 (resource allocation type 1) is used is indicated by the first DCI format.

## Embodiment 9

Embodiment 9 illustrates a schematic diagram of a relationship between a first DCI format, a second field, a first value set, a first reference value, a target threshold, and the number of PRBs comprised in a target PRB bundle according to one embodiment of the present application, as shown in FIG. 9.

In Embodiment 9, the first DCI format includes a second field and the second field in the first DCI format is set to 1; the first value set comprises 2 values and the first value set is configurable; a first reference value is one of the 2 values comprised in the first value set and the first reference value is configured to one of 2 or 4; and when the PRBs scheduled by the first DCI format are not consecutive or the number of PRBs scheduled by the first DCI format is not greater than the target threshold, the number of PRBs comprised in the target PRB bundle is equal to the first reference value.

As one embodiment, the first DCI format includes a second field and the second field in the first DCI format is set to 1.

As one embodiment, the second field includes at least one bit.

As one embodiment, the second field comprises only one bit.

As one embodiment, the second field is a PRB bundling size indicator field.

As one embodiment, the second field is used to indicate PRB bundling size.

As one embodiment, the second field is used to receive the first signal.

As one embodiment, the second field is used to indicate a property of the first signal in the frequency domain.

As one embodiment, the first value set comprises 2 values and the first value set is configurable; a first reference value is one of the 2 values comprised in the first value set and the first reference value is configured to one of 2 or 4; and when the PRBs scheduled by the first DCI format are not consecutive or the number of PRBs scheduled by the first DCI format is not greater than the target threshold, the number of PRBs comprised in the target PRB bundle is equal to the first reference value.

As one embodiment, the first value set is configured by higher layer signaling.

As one embodiment, the first value set is configured in PDSCH-Config.

As one embodiment, the first value set is configured in PUSCH-Config.

As one embodiment, the first value set is configured by bundleSizeSet1.

As one embodiment, a value other than the first reference value in the first value set is wideband.

As one embodiment, the 2 values included in the first value set are 2 and wideband, respectively, or the two values included in the first value set are 4 and wideband, respectively.

As one embodiment, the higher layer parameter prb-BundlingType is set to 'dynamicBundling.'

As one embodiment, higher layer in the present application includes at least one of a MAC layer and an RRC layer.

As one embodiment, the first DCI format includes a second field and the second field in the first DCI format is set to 1; the first value set comprises 2 values and the first value set is configurable; a first reference value is one of the 2 values comprised in the first value set and the first reference value is configured to one of 2 or 4; and when the number of PRBs scheduled by the first DCI format is not greater than the target threshold, the number of PRBs comprised in the target PRB bundle is equal to the first reference value.

As one embodiment, the first DCI format includes a second field and the second field in the first DCI format is set to 1; the first value set comprises 2 values and the first value set is configurable; a first reference value is one of the 2 values comprised in the first value set and the first reference value is configured to one of 2 or 4; and when the number of PRBs scheduled by the first DCI format is less than the target threshold, the number of PRBs comprised in the target PRB bundle is equal to the first reference value.

## Embodiment 10

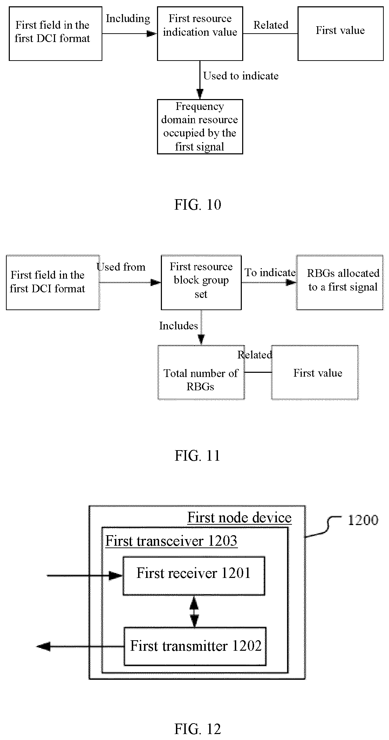

Embodiment 10 illustrates a first field in a first DCI format, a first resource indication value, a first value, and a first signal according to one embodiment of the present application, as shown in FIG. 10.

In Embodiment 10, the first field in the first DCI format includes a first resource indication value, the first resource indication value is related to the first value, and the first resource indication value is used to indicate a frequency domain resource occupied by the first signal.

As one embodiment, the first resource indication value is a resource indication value (RIV).

As one embodiment, the first resource indication value is used to indicate resource block(s) (RB(s)) allocated to the first signal.

As one embodiment, the first resource indication value is used to indicate at least one PRB occupied by the first signal.

As one embodiment, the first resource indication value corresponds to a starting virtual resource block and a length in terms of contiguously allocated resource blocks.

As one embodiment, the first resource indication value corresponds to a starting virtual resource block occupied by the first signal and a number of resource blocks occupied by the first signal.

As one embodiment, the first value is used to determine the first resource indication value.

As one embodiment, the first value is used to obtain the first resource indication value.

As one embodiment, the first value is used to perform a calculation to obtain the first resource indication value.

As one embodiment, the first value is used to perform at least one of a calculation or a judgment to obtain the first resource indication value.

As one embodiment, if $(L_{RBs} - 1) \leq \left\lfloor N_{BWP}^{size} / 2 \right\rfloor$ then $RIV = N_{BWP}^{size}(L_{RBs} - 1) + RB_{start}$ ; otherwise $RIV = N_{BWP}^{size}(N_{BWP}^{size} - L_{RBs} + 1) + (N_{BWP}^{size} - 1 - RB_{start})$ , wherein the $N_{BWP}^{size}$ is equal to the first value, the $RB_{start}$ represents the starting virtual resource block occupied by the first signal, the $L_{RBs}$ represents the number of consecutive resource blocks assigned to the first signal, the $L_{RBs}$ is not less than 1 and not more than $N_{BWP}^{size} - RB_{start}$, and the RIV represents the first resource indication value.

As one embodiment, if $(L_{RBs} - 1) \leq \left\lfloor N_{BWP}^{size} / 2 \right\rfloor$ then $RIV = N_{BWP}^{size}(L_{RBs} - 1) + RB_{start}$ ; otherwise $RIV = N_{BWP}^{size}(N_{BWP}^{size} - L_{RBs} + 1) + (N_{BWP}^{size} - 1 - RB_{start})$ , wherein the $N_{BWP}^{size}$ is equal to the first value, the $RB_{start}$ represents the starting virtual resource block occupied by the first signal, the $L_{RBs}$ represents the number of consecutive resource blocks assigned to the first signal, the $L_{RBs}$ not less than 1 and not more than the smaller of $N_{BWP}^{size} - RB_{start}$ and the second value, and the RIV represents the first resource indication value.

As one embodiment, a first condition comprises: $RB_{start}$ is one of $0, 1, ..., N_{BWP}^{size} - 1$ and $L_{RBs}$ is a positive integer not less than 1 and not more than the smaller of $N_{BWP}^{size} - RB_{start}$ and the second value; the second condition comprises: {if $(L_{RBs} - 1) \leq \left\lfloor N_{BWP}^{size} / 2 \right\rfloor$ then $RIV = N_{BWP}^{size}(L_{RBs} - 1) + RB_{start}$ ; otherwise $RIV = N_{BWP}^{size}(N_{BWP}^{size} - L_{RBs} + 1) + (N_{BWP}^{size} - 1 - RB_{start})$ }; the target resource indication value set is composed of all RIVs that satisfy the first condition and the second condition; wherein the $N_{BWP}^{size}$ is equal to the first value, the size of the first field in the first DCI format is equal to $\lceil log_2 K \rceil$, and the K is equal to the number of RIVs included in the resource indication value set.

As one embodiment, the first resource indication value is positively correlated with the first value.

As one embodiment, the first resource indication value is linearly correlated with the first value.

As one embodiment, the first value is used to configure the first resource indication value.

As one embodiment, the first resource indication value is equal to 2 times the first value.

As one embodiment, the statement that the first field in the first DCI format includes a first resource indication value includes: The value of the first field in the first DCI format is equal to the first resource indication value.

As one embodiment, the statement that the first field in the first DCI format includes a first resource indication value includes: The bits in the first field in the first DCI format represent the first resource indication value.

## Embodiment 11

Embodiment 11 illustrates a schematic diagram of a relationship between a first field in a first DCI format, a first resource block group set, a first value, and a first signal according to one embodiment of the present application, as shown in FIG. 11.

In Embodiment 11, the first field in the first DCI format is used to indicate the RBGs allocated to the first signal in the first resource block group set and the total number of RBGs comprised in the first resource block group set is associated with the first value.

As one embodiment, the first resource block group set includes a plurality of RBGs (Resource Block Groups).

As one embodiment, the size of one RBG in the first resource block group set is related to the first value.

As one embodiment, the size of one RBG in the first resource block group set is positively correlated with the first value.

As one embodiment, the size of one RBG in the first resource block group set and the first value are associated with each other through a lookup table.

As one embodiment, the size of one RBG in the first resource block group set is equal to $P - N_{BWP,i}^{start} \bmod P$.

As one embodiment, the size of one RBG in the first resource block group set is equal to $\left(N_{BWP,i}^{start} + N_{BWP,i}^{size}\right) \bmod P$.

As one embodiment, the size of one RBG in the first resource block group set is equal to $P$.

As one embodiment, any of the RBGs in the first resource block group set are for the first sub-band.

As one embodiment, the total number of RBGs included in the first resource block group set is positively correlated with the first value.

As one embodiment, the first value is used to determine the total number of RBGs included in the first resource block group set.

As one embodiment, the first value is used to indicate the total number of RBGs included in the first resource block group set.

As one embodiment, the first value is used to configure the total number of RBGs included in the first resource block group set.

As one embodiment, the total number of RBGs included in the first resource block group set is equal to $\left\lceil \left(N_{BWP,i}^{size} + \left(N_{BWP,i}^{start} \bmod P\right)\right)/P \right\rceil$.

As one embodiment, the $N_{BWP,i}^{size}$ is equal to the first value.

As one embodiment, the $N_{BWP,i}^{start}$ represents the starting PRB of the first sub-band.

As one embodiment, the $P$ is the nominal RBG size.

As one embodiment, the first field in the first DCI format includes a bitmap, the bits in this bitmap correspond one-to-one to the RBGs included in the first resource block group set, the target RBG is any RBG in the first resource block group set, and the target RBG corresponds to the target bit in this bitmap; when the value of the target bit is 1, the target RBG is allocated to the first signal; when the value of the target bit is 0, the target RBG is not allocated to the first signal.

As one embodiment, the first field in the first DCI format is used to explicitly indicate the RBG allocated to the first signal from the first resource block group set

As one embodiment, the first field in the first DCI format is used to implicitly indicate the RBG allocated to the first signal from the first resource block group set.

## Embodiment 12

Embodiment 12 illustrates a structural block diagram of a processing apparatus in a first node device, as shown in FIG. 12. In FIG. 12, the first node device processing apparatus 1200 includes a first transceiver 1203 and the first transceiver 1203 includes a first receiver 1201 and a first transmitter 1202.

As one embodiment, the first node device 1200 is a base station.

As one embodiment, the first node device 1200 is a user device.

As one embodiment, the first node device 1200 is a relay node.

As one embodiment, the first node device 1200 is an in-vehicle communications device.

As one embodiment, the first node device 1200 is a user device that supports V2X communication.

As one embodiment, the first node device 1200 is a relay node that supports V2X communication.

As one embodiment, the first node device 1200 is a user device that supports operations on a high-frequency spectrum.

As one embodiment, the first node device 1200 is a user device that supports operations on a shared spectrum.

As one embodiment, the first node device 1200 is a user device that supports XR services.

As one embodiment, the first node device 1200 is a RedCap UE.

As one embodiment, the first receiver 1201 includes at least one of the antenna 452, the receiver 454, the multi-antenna receiving processor 458, the receiving processor 456, the controller/processor 459, the memory 460, and the data source 467 in FIG. 4 of the present application.

As one embodiment, the first receiver 1201 includes at least the first five of the antenna 452, the receiver 454, the multi-antenna receiving processor 458, the receiving processor 456, the controller/processor 459, the memory 460, and the data source 467 in FIG. 4 of the present application.

As one embodiment, the first receiver 1201 includes at least the first four of the antenna 452, the receiver 454, the multi-antenna receiving processor 458, the receiving processor 456, the controller/processor 459, the memory 460, and the data source 467 in FIG. 4 of the present application.

As one embodiment, the first receiver 1201 includes at least the first three of the antenna 452, the receiver 454, the multi-antenna receiving processor 458, the receiving processor 456, the controller/processor 459, the memory 460, and the data source 467 in FIG. 4 of the present application.

As one embodiment, the first receiver 1201 includes at least the first two of the antenna 452, the receiver 454, the multi-antenna receiving processor 458, the receiving processor 456, the controller/processor 459, the memory 460, and the data source 467 in FIG. 4 of the present application.

As one embodiment, the first transmitter 1202 includes at least one of the antenna 452, the transmitter 454, the multi-antenna transmitting processor 457, the transmitting processor 468, the controller/processor 459, the memory 460, and the data source 467 in FIG. 4 of the present application.

As one embodiment, the first transmitter 1202 includes at least the first five of the antenna 452, the transmitter 454, the multi-antenna transmitting processor 457, the transmitting processor 468, the controller/processor 459, the memory 460, and the data source 467 in FIG. 4 of the present application.

As one embodiment, the first transmitter 1202 includes at least the first four of the antenna 452, the transmitter 454, the multi-antenna transmitting processor 457, the transmitting processor 468, the controller/processor 459, the memory 460, and the data source 467 in FIG. 4 of the present application.

As one embodiment, the first transmitter 1202 includes at least the first three of the antenna 452, the transmitter 454, the multi-antenna transmitting processor 457, the transmitting processor 468, the controller/processor 459, the memory 460, and the data source 467 in FIG. 4 of the present application.

As one embodiment, the first transmitter 1202 includes at least the first two of the antenna 452, the transmitter 454, the multi-antenna transmitting processor 457, the transmitting processor 468, the controller/processor 459, the memory 460, and the data source 467 in FIG. 4 of the present application.

As one embodiment, the first receiver 1201 receives a first DCI format; the first transceiver 1203 operates a first signal, the first signal occupies at least 1 PRB bundle in a frequency domain, any PRB bundle occupied by the first signal in the frequency domain belongs to a first sub-band, the first sub-band comprises a plurality of consecutive PRBs, and a first value is equal to the number of PRBs comprised in the first sub-band; wherein the first DCI format comprises a first field, the first field in the first DCI format is used for indicating a frequency domain resource occupied by the first signal, and the size of the first field in the first DCI format is related to the first value; a target PRB bundle is 1 PRB bundle occupied by the first signal in the frequency domain, the target PRB bundle comprises at least 1 PRB, the number of PRBs comprised in the target PRB bundle is related to both the number of PRBs scheduled by the first DCI format and a target threshold, and the target threshold is equal to the ratio of a second value to 2; and the second value is related to the capability of the receiver of the first DCI format and the first value is greater than the second value.

As one embodiment, the first sub-band is a BWP.

As one embodiment, when the PRBs scheduled by the first DCI format are consecutive and the number of PRBs scheduled by the first DCI format is greater than the target threshold, the number of PRBs comprised in the target PRB bundle is the same as the scheduled bandwidth; when the PRBs scheduled by the first DCI format are not consecutive or the number of PRBs scheduled by the first DCI format is not greater than the target threshold, the number of PRBs comprised in the target PRB bundle is equal to 2 or 4.

As one embodiment, the first DCI format includes a second field and the second field in the first DCI format is set to 1; the first value set comprises 2 values and the first value set is configurable; a first reference value is one of the 2 values comprised in the first value set and the first reference value is configured to one of 2 or 4; and when the PRBs scheduled by the first DCI format are not consecutive or the number of PRBs scheduled by the first DCI format is not greater than the target threshold, the number of PRBs comprised in the target PRB bundle is equal to the first reference value.

As one embodiment, the first value is used to determine the size of the first field in the first DCI format.

As one embodiment, the first field in the first DCI format includes a first resource indication value, the first resource indication value is related to the first value, and the first resource indication value is used to indicate a frequency domain resource occupied by the first signal;

As one embodiment, the first field in the first DCI format is used to indicate the RBGs allocated to the first signal in the first resource block group set and the total number of RBGs comprised in the first resource block group set is associated with the first value.

As one embodiment, the first node can assume that the same precoding is applied to any of the PRBs in the target PRB bundle.

As one embodiment, the first transmitter 1202 sends a target information block and the target information block includes UE capability information; wherein based on the target information block, the second value is equal to a first default value; and the first default value is a positive constant.

As one embodiment, the first transmitter 1202 sends a first information block; the first receiver 1201 then receives a second information block; wherein the first information block includes UE capability information; based on the first information block, the second information block is used to indicate the second value from a first value range.

As one embodiment, the first receiver 1201 receives the first signal; or the first transmitter 1202 sends the first signal.

As one embodiment, the first receiver 1201 receives a first DCI format; the first transceiver 1203 operates a first signal, the first signal occupies at least 1 PRB bundle in a frequency domain, any PRB bundle occupied by the first signal in the frequency domain belongs to a first sub-band, the first sub-band comprises a plurality of consecutive PRBs, and a first value is equal to the number of PRBs comprised in the first sub-band; wherein the first DCI format comprises a first field, the first field in the first DCI format is used for indicating a frequency domain resource occupied by the first signal, and the size of the first field in the first DCI format is related to the first value; a target PRB bundle is 1 PRB bundle occupied by the first signal in the frequency domain, the target PRB bundle comprises at least 1 PRB, the number of PRBs comprised in the target PRB bundle is related to both the number of PRBs scheduled by the first DCI format and a target threshold, the target threshold is equal to the ratio of a second value to 2, the second value is a positive integer, the second value is a constant or indicated by higher layer signaling, and the first value is not equal to the second value.

As one embodiment, the first sub-band is a BWP.

As one embodiment, when the PRBs scheduled by the first DCI format are consecutive and the number of PRBs scheduled by the first DCI format is greater than the target threshold, the number of PRBs comprised in the target PRB bundle is the same as the scheduled bandwidth; when the PRBs scheduled by the first DCI format are not consecutive or the number of PRBs scheduled by the first DCI format is not greater than the target threshold, the number of PRBs comprised in the target PRB bundle is equal to 2 or 4.

As one embodiment, the first DCI format includes a second field and the second field in the first DCI format is set to 1; the first value set comprises 2 values and the first value set is configurable; a first reference value is one of the 2 values comprised in the first value set and the first reference value is configured to one of 2 or 4; and when the PRBs scheduled by the first DCI format are not consecutive or the number of PRBs scheduled by the first DCI format is not greater than the target threshold, the number of PRBs comprised in the target PRB bundle is equal to the first reference value.

As one embodiment, the first value is used to determine the size of the first field in the first DCI format.

As one embodiment, the first field in the first DCI format includes a first resource indication value, the first resource indication value is related to the first value, and the first resource indication value is used to indicate a frequency domain resource occupied by the first signal;

As one embodiment, the first field in the first DCI format is used to indicate the RBGs allocated to the first signal in the first resource block group set and the total number of RBGs comprised in the first resource block group set is associated with the first value.

As one embodiment, the first node can assume that the same precoding is applied to any of the PRBs in the target PRB bundle.

As one embodiment, one of the first value and the second value is equal to the number of PRBs comprised in the BWP to which the first signal belongs in the frequency domain.

As one embodiment, the greater of the first value and the second value is equal to the number of PRBs comprised in the BWP to which the first signal belongs in the frequency domain.

As one embodiment, the first value is greater than the second value.

As one embodiment, the first value is less than the second value.

As one embodiment, the second value is equal to a first default value; the first default value is a positive constant.

As one embodiment, the second value is configured by RRC signaling.

As one embodiment, the second value is configured by MAC CE.

As one embodiment, the first transmitter 1202 sends a target information block and the target information block includes UE capability information; wherein based on the target information block, the second value is equal to a first default value; and the first default value is a positive constant.

As one embodiment, the first transmitter 1202 sends a first information block; the first receiver 1201 then receives a second information block; wherein the first information block includes UE capability information; based on the first information block, the second information block is used to indicate the second value from a first value range.

As one embodiment, the first receiver 1201 receives a first DCI format; wherein the first DCI format comprises a first field, the first field in the first DCI format is used for indicating frequency domain resource allocation, the size of the first field in the first DCI format is related to a first value, the first value is equal to the size of a first sub-band, and the first sub-band includes a plurality of consecutive PRBs; the target PRB bundle includes at least 1 PRB, the number of PRBs comprised in the target PRB bundle is related to both the number of PRBs scheduled by the first DCI format and a target threshold, the target threshold is equal to the ratio of a second value to 2, the first value is greater than the second value, and the second value is greater than 0.

As one embodiment, the first receiver 1201 receives a first signal; wherein the number of PRBs included in the target PRB bundle is used to receive the first signal.

As one embodiment, the first transmitter 1202 sends a first signal; wherein the number of PRBs included in the target PRB bundle is used to send the first signal.

As one embodiment, the second value is related to the capability of the receiver of the first DCI format.

As one embodiment, the second value is a constant.

As one embodiment, the second value is predefined.

As one embodiment, the second value is configurable.

As one embodiment, the first sub-band is a BWP.

As one embodiment, when the PRBs scheduled by the first DCI format are consecutive and the number of PRBs scheduled by the first DCI format is greater than the target threshold, the number of PRBs comprised in the target PRB bundle is the same as the scheduled bandwidth; when the PRBs scheduled by the first DCI format are not consecutive or the number of PRBs scheduled by the first DCI format is not greater than the target threshold, the number of PRBs comprised in the target PRB bundle is equal to 2 or 4.

As one embodiment, the first DCI format includes a second field and the second field in the first DCI format is set to 1; the first value set comprises 2 values and the first value set is configurable; a first reference value is one of the 2 values comprised in the first value set and the first reference value is configured to one of 2 or 4; and when the PRBs scheduled by the first DCI format are not consecutive or the number of PRBs scheduled by the first DCI format is not greater than the target threshold, the number of PRBs comprised in the target PRB bundle is equal to the first reference value.

As one embodiment, the first value is used to determine the size of the first field in the first DCI format.

As one embodiment, the first field in the first DCI format includes a first resource indication value, the first resource indication value is related to the first value, and the first resource indication value is used to indicate a frequency domain resource occupied by the first signal;

As one embodiment, the first field in the first DCI format is used to indicate the RBGs allocated to the first signal in the first resource block group set and the total number of RBGs comprised in the first resource block group set is associated with the first value.

As one embodiment, the first node can assume that the same precoding is applied to any of the PRBs in the target PRB bundle.

As one embodiment, the second value is equal to a first default value; the first default value is a positive constant.

As one embodiment, the second value is configured by RRC signaling.

As one embodiment, the second value is configured by MAC CE.

As one embodiment, the first transmitter 1202 sends a target information block and the target information block includes UE capability information; wherein based on the target information block, the second value is equal to a first default value; and the first default value is a positive constant.

## **Embodiment 13**

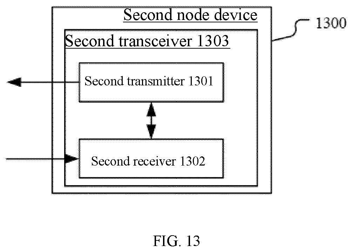

Embodiment 13 illustrates a structural block diagram of a processing apparatus in a second node device, as shown in FIG. 13. In FIG. 13, the second node device processing apparatus 1300 includes a second transceiver 1303 including a second transmitter 1301 and a second receiver 1302.

As one embodiment, the second node device 1300 is a user device.

As one embodiment, the second node device 1300 is a base station.

As one embodiment, the second node device 1300 is a satellite device.

As one embodiment, the second node device 1300 is a relay node.

As one embodiment, the second node device 1300 is an in-vehicle communications device.

As one embodiment, the second node device 1300 is a user device that supports V2X communication.

As one embodiment, the second node device 1300 is a device that supports operations on a high-frequency spectrum.

As one embodiment, the second node device 1300 is a device that supports operations on a shared spectrum.

As one embodiment, the second node device 1300 is a device that supports XR services.

As one embodiment, the second node device 1300 is one of a test apparatus, a test device, or a test instrument.

As one embodiment, the second transmitter 1301 includes at least one of the antenna 420, the transmitter 418, the multi-antenna transmitting processor 471, the transmitting processor 416, the controller/processor 475, and the memory 476 in FIG. 4 of the present application.

As one embodiment, the second transmitter 1301 includes at least the first five of the antenna 420, the transmitter 418, the multi-antenna transmitting processor 471, the transmitting processor 416, the controller/processor 475, and the memory 476 in FIG. 4 of the present application.

As one embodiment, the second transmitter 1301 includes at least the first four of the antenna 420, the transmitter 418, the multi-antenna transmitting processor 471, the transmitting processor 416, the controller/processor 475, and the memory 476 in FIG. 4 of the present application.

As one embodiment, the second transmitter 1301 includes at least the first three of the antenna 420, the transmitter 418, the multi-antenna transmitting processor 471, the transmitting processor 416, the controller/processor 475, and the memory 476 in FIG. 4 of the present application.

As one embodiment, the second transmitter 1301 includes at least the first two of the antenna 420, the transmitter 418, the multi-antenna transmitting processor 471, the transmitting processor 416, the controller/processor 475, and the memory 476 in FIG. 4 of the present application.

As one embodiment, the second receiver 1302 includes at least one of the antenna 420, the receiver 418, the multi-antenna receiving processor 472, the receiving processor 470, the controller/processor 475, and the memory 476 in FIG. 4 of the present application.

As one embodiment, the second receiver 1302 includes at least the first five of the antenna 420, the receiver 418, the multi-antenna receiving processor 472, the receiving processor 470, the controller/processor 475, and the memory 476 in FIG. 4 of the present application.

As one embodiment, the second receiver 1302 includes at least the first four of the antenna 420, the receiver 418, the multi-antenna receiving processor 472, the receiving processor 470, the controller/processor 475, and the memory 476 in FIG. 4 of the present application.

As one embodiment, the second receiver 1302 includes at least the first three of the antenna 420, the receiver 418, the multi-antenna receiving processor 472, the receiving processor 470, the controller/processor 475, and the memory 476 in FIG. 4 of the present application.

As one embodiment, the second receiver 1302 includes at least the first two of the antenna 420, the receiver 418, the multi-antenna receiving processor 472, the receiving processor 470, the controller/processor 475, and the memory 476 in FIG. 4 of the present application.

As one embodiment, the second transmitter 1301 sends a first DCI format; the second transceiver 1303 operates a first signal, the first signal occupies at least 1 PRB bundle in a frequency domain, any PRB bundle occupied by the first signal in the frequency domain belongs to a first sub-band, the first sub-band comprises a plurality of consecutive PRBs, and a first value is equal to the number of PRBs comprised in the first sub-band; wherein the first DCI format comprises a first field, the first field in the first DCI format is used for indicating a frequency domain resource occupied by the first signal, and the size of the first field in the first DCI format is related to the first value; a target PRB bundle is 1 PRB bundle occupied by the first signal in the frequency domain, the target PRB bundle comprises at least 1 PRB, the number of PRBs comprised in the target PRB bundle is related to both the number of PRBs scheduled by the first DCI format and a target threshold, and the target threshold is equal to the ratio of a second value to 2; and the second value is related to the capability of the receiver of the first DCI format and the first value is greater than the second value.

As one embodiment, the first sub-band is a BWP.

As one embodiment, when the PRBs scheduled by the first DCI format are consecutive and the number of PRBs scheduled by the first DCI format is greater than the target threshold, the number of PRBs comprised in the target PRB bundle is the same as the scheduled bandwidth; when the PRBs scheduled by the first DCI format are not consecutive or the number of PRBs scheduled by the first DCI format is not greater than the target threshold, the number of PRBs comprised in the target PRB bundle is equal to 2 or 4.

As one embodiment, the first DCI format includes a second field and the second field in the first DCI format is set to 1; the first value set comprises 2 values and the first value set is configurable; a first reference value is one of the 2 values comprised in the first value set and the first reference value is configured to one of 2 or 4; and when the PRBs scheduled by the first DCI format are not consecutive or the number of PRBs scheduled by the first DCI format is not greater than the target threshold, the number of PRBs comprised in the target PRB bundle is equal to the first reference value.

As one embodiment, the first value is used to determine the size of the first field in the first DCI format.

As one embodiment, the first field in the first DCI format includes a first resource indication value, the first resource indication value is related to the first value, and the first resource indication value is used to indicate a frequency domain resource occupied by the first signal;

As one embodiment, the first field in the first DCI format is used to indicate the RBGs allocated to the first signal in the first resource block group set and the total number of RBGs comprised in the first resource block group set is associated with the first value.

As one embodiment, the first node can assume that the same precoding is applied to any of the PRBs in the target PRB bundle.

As one embodiment, the second receiver 1302 receives a target information block and the target information block includes UE capability information; wherein based on the target information block, the second value is equal to a first default value; and the first default value is a positive constant.

As one embodiment, the second receiver 1302 receives a first information block; the second transmitter 1301 then sends a second information block; wherein the first information block includes UE capability information; based on the first information block, the second information block is used to indicate the second value from a first value range.

As one embodiment, the second transmitter 1301 sends the first signal; or the second receiver 1302 receives the first signal.

As one embodiment, the second transmitter 1301 sends a first DCI format; the second transceiver 1303 operates a first signal, the first signal occupies at least 1 PRB bundle in a frequency domain, any PRB bundle occupied by the first signal in the frequency domain belongs to a first sub-band, the first sub-band comprises a plurality of consecutive PRBs, and a first value is equal to the number of PRBs comprised in the first sub-band; wherein the first DCI format comprises a first field, the first field in the first DCI format is used for indicating a frequency domain resource occupied by the first signal, and the size of the first field in the first DCI format is related to the first value; a target PRB bundle is 1 PRB bundle occupied by the first signal in the frequency domain, the target PRB bundle comprises at least 1 PRB, the number of PRBs comprised in the target PRB bundle is related to both the number of PRBs scheduled by the first DCI format and a target threshold, the target threshold is equal to the ratio of a second value to 2, the second value is a positive integer, the second value is a constant or indicated by higher layer signaling, and the first value is not equal to the second value.

As one embodiment, the first sub-band is a BWP.

As one embodiment, when the PRBs scheduled by the first DCI format are consecutive and the number of PRBs scheduled by the first DCI format is greater than the target threshold, the number of PRBs comprised in the target PRB bundle is the same as the scheduled bandwidth; when the PRBs scheduled by the first DCI format are not consecutive or the number of PRBs scheduled by the first DCI format is not greater than the target threshold, the number of PRBs comprised in the target PRB bundle is equal to 2 or 4.

As one embodiment, the first DCI format includes a second field and the second field in the first DCI format is set to 1; the first value set comprises 2 values and the first value set is configurable; a first reference value is one of the 2 values comprised in the first value set and the first reference value is configured to one of 2 or 4; and when the PRBs scheduled by the first DCI format are not consecutive or the number of PRBs scheduled by the first DCI format is not greater than the target threshold, the number of PRBs comprised in the target PRB bundle is equal to the first reference value.

As one embodiment, the first value is used to determine the size of the first field in the first DCI format.

As one embodiment, the first field in the first DCI format includes a first resource indication value, the first resource indication value is related to the first value, and the first resource indication value is used to indicate a frequency domain resource occupied by the first signal;

As one embodiment, the first field in the first DCI format is used to indicate the RBGs allocated to the first signal in the first resource block group set and the total number of RBGs comprised in the first resource block group set is associated with the first value.

As one embodiment, the first node can assume that the same precoding is applied to any of the PRBs in the target PRB bundle.

As one embodiment, one of the first value and the second value is equal to the number of PRBs comprised in the BWP to which the first signal belongs in the frequency domain.

As one embodiment, the greater of the first value and the second value is equal to the number of PRBs comprised in the BWP to which the first signal belongs in the frequency domain.

As one embodiment, the first value is greater than the second value.

As one embodiment, the first value is less than the second value.

As one embodiment, the second value is equal to a first default value; the first default value is a positive constant.

As one embodiment, the second value is configured by RRC signaling.

As one embodiment, the second value is configured by MAC CE.

As one embodiment, the second receiver 1302 receives a target information block and the target information block includes UE capability information; wherein based on the target information block, the second value is equal to a first default value; and the first default value is a positive constant.

As one embodiment, the second receiver 1302 receives a first information block; the second transmitter 1301 then sends a second information block; wherein the first information block includes UE capability information; based on the first information block, the second information block is used to indicate the second value from a first value range.

As one embodiment, the second transmitter 1301 sends a first DCI format; wherein the first DCI format comprises a first field, the first field in the first DCI format is used for indicating frequency domain resource allocation, the size of the first field in the first DCI format is related to a first value, the first value is equal to the size of a first sub-band, and the first sub-band includes a plurality of consecutive PRBs; the target PRB bundle includes at least 1 PRB, the number of PRBs comprised in the target PRB bundle is related to both the number of PRBs scheduled by the first DCI format and a target threshold, the target threshold is equal to the ratio of a second value to 2, the first value is greater than the second value, and the second value is greater than 0.

As one embodiment, the second transmitter 1301 sends the first signal; wherein the number of PRBs included in the target PRB bundle is used by the receiver of the first DCI format to operate the first signal.

As one embodiment, the second receiver 1302 receives the first signal; wherein the number of PRBs included in the target PRB bundle is used by the receiver of the first DCI format to operate the first signal.

As one embodiment, the second value is related to the capability of the receiver of the first DCI format.

As one embodiment, the second value is a constant.

As one embodiment, the second value is predefined.

As one embodiment, the second value is configurable.

As one embodiment, the first sub-band is a BWP.

As one embodiment, when the PRBs scheduled by the first DCI format are consecutive and the number of PRBs scheduled by the first DCI format is greater than the target threshold, the number of PRBs comprised in the target PRB bundle is the same as the scheduled bandwidth; when the PRBs scheduled by the first DCI format are not consecutive or the number of PRBs scheduled by the first DCI format is not greater than the target threshold, the number of PRBs comprised in the target PRB bundle is equal to 2 or 4.

As one embodiment, the first DCI format includes a second field and the second field in the first DCI format is set to 1; the first value set comprises 2 values and the first value set is configurable; a first reference value is one of the 2 values comprised in the first value set and the first reference value is configured to one of 2 or 4; and when the PRBs scheduled by the first DCI format are not consecutive or the number of PRBs scheduled by the first DCI format is not greater than the target threshold, the number of PRBs comprised in the target PRB bundle is equal to the first reference value.

As one embodiment, the first value is used to determine the size of the first field in the first DCI format.

As one embodiment, the first field in the first DCI format includes a first resource indication value, the first resource indication value is related to the first value, and the first resource indication value is used to indicate a frequency domain resource occupied by the first signal;

As one embodiment, the first field in the first DCI format is used to indicate the RBGs allocated to the first signal in the first resource block group set and the total number of RBGs comprised in the first resource block group set is associated with the first value.

As one embodiment, the first node can assume that the same precoding is applied to any of the PRBs in the target PRB bundle.

As one embodiment, the second value is equal to a first default value; the first default value is a positive constant.

As one embodiment, the second value is configured by RRC signaling.

As one embodiment, the second value is configured by MAC CE.

As one embodiment, the second receiver 1302 receives a target information block and the target information block includes UE capability information; wherein based on the target information block, the second value is equal to a first default value; and the first default value is a positive constant.

As one embodiment, the second receiver 1302 receives a first information block; the second transmitter 1301 then sends a second information block; wherein the first information block includes UE capability information; based on the first information block, the second information block is used to indicate the second value from a first value range.

Those of ordinary skill in the art may understand that all or part of the steps in the above-described methods can be accomplished by instructing relevant hardware through a program that can be stored in computer-readable storage media, such as read only memory, hard disk, or optical disk. Optionally, the steps of the above embodiments, in whole or in part, may also be implemented using one or more integrated circuits. Accordingly, the various module units in the above embodiments may be implemented in the form of hardware or in the form of software function modules. The present application is not limited to the combination of software and hardware of any particular form. The first node device in the present application includes but is not limited to cell phones, tablets, notebooks, network cards, low-power devices, eMTC devices, NB-IoT devices, in-vehicle communications devices, aircraft, drones, remote-controlled aircraft, and other wireless communication devices. The second node device in the present application includes but is not limited to cell phones, tablets, notebooks, network cards, low-power devices, eMTC devices, NB-IoT devices, in-vehicle communications devices, aircraft, drones, remote-controlled aircraft, and other wireless communication devices. The user device, UE, or terminal in the present application includes but is not limited to cell phones, tablets, notebooks, network cards, low-power devices, eMTC devices, NB-IoT devices, in-vehicle communications devices, aircraft, drones, remote-controlled aircraft, and other wireless communication devices. The base station device, base station, or network side device in the present application includes but is not limited to macrocells, microcells, home base stations, relay base stations, eNB, gNB, transmission reception points TRPs, GNSS, relay satellites, satellite base stations, aerial base stations, test apparatuses, test devices, test instruments, and other devices.

It will be understood by those skilled in the art that the present invention may be implemented in other specified forms that do not deviate from its core or essential features. Thus, the presently disclosed embodiments should in any event be considered descriptive rather than limiting. The scope of the invention is determined by the appended claims, not

**EP 4 580 292 A1**

by the preceding description, and all changes within their equivalent meaning and area are considered to be included therein.

**Claims**

1. A first node used in wireless communication, comprising:

    a first receiver receiving a first DCI format;
    a first transceiver operating a first signal, the first signal occupying at least one PRB bundle in a frequency domain, any PRB bundle occupied by the first signal in the frequency domain belonging to a first sub-band, the first sub-band comprising a plurality of consecutive PRBs, and a first value being equal to the number of PRBs comprised in the first sub-band;
    wherein the first DCI format comprises a first field, the first field in the first DCI format is used for indicating a frequency domain resource occupied by the first signal, and the size of the first field in the first DCI format is related to the first value; a target PRB bundle is 1 PRB bundle occupied by the first signal in the frequency domain, the target PRB bundle includes at least 1 PRB, the number of PRBs comprised in the target PRB bundle is related to both the number of PRBs scheduled by the first DCI format and a target threshold, and the target threshold is equal to the ratio of a second value to 2; and the second value is related to the capability of the receiver of the first DCI format and the first value is greater than the second value.

2. The first node according to Claim 1, wherein the first sub-band is a BWP.

3. The first node according to Claim 1 or 2, wherein when the PRBs scheduled in the first DCI format are consecutive and the number of PRBs scheduled by the first DCI format is greater than the target threshold, the number of PRBs comprised in the target PRB bundle is the same as the scheduled bandwidth; when the PRBs scheduled by the first DCI format are not consecutive or the number of PRBs scheduled by the first DCI format is not greater than the target threshold, the number of PRBs comprised in the target PRB bundle is equal to 2 or 4.

4. The first node according to any one of Claims 1-3, wherein the first DCI format includes a second field and the second field in the first DCI format is set to 1; the first value set comprises 2 values and the first value set is configurable; a first reference value is one of the 2 values comprised in the first value set and the first reference value is configured to one of 2 or 4; and when the PRBs scheduled by the first DCI format are not consecutive or the number of PRBs scheduled by the first DCI format is not greater than the target threshold, the number of PRBs comprised in the target PRB bundle is equal to the first reference value.

5. The first node according to any one of Claims 1-4, wherein the first value is used to determine the size of the first field in the first DCI format.

6. The first node according to any one of Claims 1-5, wherein the first field in the first DCI format includes a first resource indication value, the first resource indication value is related to the first value, and the first resource indication value is used to indicate a frequency domain resource occupied by the first signal;
    alternatively, wherein the first field in the first DCI format is used to indicate the RBGs allocated to the first signal in the first resource block group set and the total number of RBGs comprised in the first resource block group set is associated with the first value.

7. The first node according to any one of Claims 1-6, wherein the first node can assume that the same precoding is applied to any of the PRBs in the target PRB bundle.

8. A second node used in wireless communication, comprising:

    a second transmitter sending a first DCI format;
    a second transceiver operating a first signal, the first signal occupying at least one PRB bundle in a frequency domain, any PRB bundle occupied by the first signal in the frequency domain belonging to a first sub-band, the first sub-band comprising a plurality of consecutive PRBs, and a first value being equal to the number of PRBs comprised in the first sub-band;
    wherein the first DCI format comprises a first field, the first field in the first DCI format is used for indicating a frequency domain resource occupied by the first signal, and the size of the first field in the first DCI format is related to the first value; a target PRB bundle is 1 PRB bundle occupied by the first signal in the frequency domain, the target PRB bundle includes at least 1 PRB, the number of PRBs comprised in the target PRB bundle is related to both the number of PRBs scheduled by the first DCI format and a target threshold, and the target threshold is equal to the ratio of a second value to 2; and the second value is related to the capability of the receiver of the first DCI format and the first value is greater than the second value.

9. A method used in a first node in wireless communication, comprising:

receiving a first DCI format;
operating a first signal, the first signal occupying at least one PRB bundle in a frequency domain, any PRB bundle occupied by the first signal in the frequency domain belonging to a first sub-band, the first sub-band comprising a plurality of consecutive PRBs, and a first value being equal to the number of PRBs comprised in the first sub-band; wherein the first DCI format comprises a first field, the first field in the first DCI format is used for indicating a frequency domain resource occupied by the first signal, and the size of the first field in the first DCI format is related to the first value; a target PRB bundle is 1 PRB bundle occupied by the first signal in the frequency domain, the target PRB bundle includes at least 1 PRB, the number of PRBs comprised in the target PRB bundle is related to both the number of PRBs scheduled by the first DCI format and a target threshold, and the target threshold is equal to the ratio of a second value to 2; and the second value is related to the capability of the receiver of the first DCI format and the first value is greater than the second value.

10. A method used in a second node in wireless communication, comprising:

sending a first DCI format;
operating a first signal, the first signal occupying at least one PRB bundle in a frequency domain, any PRB bundle occupied by the first signal in the frequency domain belonging to a first sub-band, the first sub-band comprising a plurality of consecutive PRBs, and a first value being equal to the number of PRBs comprised in the first sub-band; wherein the first DCI format comprises a first field, the first field in the first DCI format is used for indicating a frequency domain resource occupied by the first signal, and the size of the first field in the first DCI format is related to the first value; a target PRB bundle is 1 PRB bundle occupied by the first signal in the frequency domain, the target PRB bundle includes at least 1 PRB, the number of PRBs comprised in the target PRB bundle is related to both the number of PRBs scheduled by the first DCI format and a target threshold, and the target threshold is equal to the ratio of a second value to 2; and the second value is related to the capability of the receiver of the first DCI format and the first value is greater than the second value.

FIG. 1

FIG. 2

FIG. 3

FIG. 4

FIG. 5

Target information block —Including→ UE capability information

Based on the target information block —→ A second value equal to a first default value

FIG. 6

First information block —Including→ UE capability information

Based on the first information block —→ A second information block is used to indicate a second value in a first range of values

FIG. 7

Size of the first field in the first DCI format —Related→ First value

FIG. 8

First DCI format —Including→ Second field —Set to→ 1

First value set —Including→ 2 values —Including→ First reference value —Configured to→ One of 2 or 4

When the PRBs scheduled by the first DCI format are not consecutive or the number of PRBs scheduled by the first DCI format is not greater than a target threshold — The number of PRBs comprised in the target PRB bundle is equal to the first reference value

FIG. 9

| First field in the first DCI format | → Including → | First resource indication value | → Related → | First value |

| First resource indication value | → Used to indicate → |

Frequency domain resource occupied by the first signal

FIG. 10

| First field in the first DCI format | → Used from → | First resource block group set | → To indicate → | RBGs allocated to a first signal |

Includes ↓

| Total number of RBGs | — Related — | First value |

FIG. 11

First node device — 1200

First transceiver 1203

First receiver 1201

First transmitter 1202

FIG. 12

Second node device 1300

Second transceiver 1303

Second transmitter 1301

Second receiver 1302

FIG. 13

**INTERNATIONAL SEARCH REPORT**

| International application No. |
|---|
| **PCT/CN2023/111143** |

| A. | CLASSIFICATION OF SUBJECT MATTER |
|---|---|

H04W 72/232(2023.01)i

According to International Patent Classification (IPC) or to both national classification and IPC

| B. | FIELDS SEARCHED |
|---|---|

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

3GPP, CNTXT, DWPI, ENTXTC, VEN, WPABS: 能力降低, PRB捆绑, 下行控制信息, 子频带, 数量, 阈值, 能力, 带宽, redcap, Physical Resource Block, bundling, DCI, subbands, number, threshold, capabilities, bandwidth

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 114095135 A (SHANGHAI LANGBO COMMUNICATION TECHNOLOGY CO., LTD.) 25 February 2022 (2022-02-25) description, paragraphs 0004-0074 | 1-10 |
| A | CN 109802902 A (VIVO COMMUNICATION TECHNOLOGY CO., LTD.) 24 May 2019 (2019-05-24) entire document | 1-10 |
| A | CN 113016154 A (SAMSUNG ELECTRONICS CO., LTD.) 22 June 2021 (2021-06-22) entire document | 1-10 |
| A | CN 113518443 A (HUAWEI TECHNOLOGIES CO., LTD.) 19 October 2021 (2021-10-19) entire document | 1-10 |
| A | US 2019132824 A1 (COMCAST CABLE COMMUNICATIONS, L.L.C.) 02 May 2019 (2019-05-02) entire document | 1-10 |
| A | FUTUREWEI. "Coverage Recovery for RedCap" *3GPP TSG RAN WG1 Meeting #101-e, R1-2003282*, 05 June 2020 (2020-06-05), entire document | 1-10 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 October 2023** | **23 October 2023** |

| Name and mailing address of the ISA/CN | Authorized officer |
|---|---|
| **China National Intellectual Property Administration (ISA/CN) China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/111143**

| Patent document cited in search report | | | Publication date (day/month/year) | Patent family member(s) | | | Publication date (day/month/year) |
|---|---|---|---|---|---|---|---|
| CN | 114095135 | A | 25 February 2022 | None | | | |
| CN | 109802902 | A | 24 May 2019 | None | | | |
| CN | 113016154 | A | 22 June 2021 | AU | 2020221134 | A1 | 20 May 2021 |
| | | | | EP | 3854015 | A1 | 28 July 2021 |
| | | | | CA | 3119323 | A1 | 20 August 2020 |
| | | | | KR | 20200099941 | A | 25 August 2020 |
| | | | | US | 2020266928 | A1 | 20 August 2020 |
| | | | | WO | 2020167088 | A1 | 20 August 2020 |
| | | | | IN | 202137034411 | A | 10 September 2021 |
| CN | 113518443 | A | 19 October 2021 | WO | 2021204300 | A1 | 14 October 2021 |
| | | | | VN | 92284 | A | 26 December 2022 |
| | | | | EP | 4117367 | A1 | 11 January 2023 |
| | | | | US | 2023038936 | A1 | 09 February 2023 |
| US | 2019132824 | A1 | 02 May 2019 | CA | 3022244 | A1 | 27 April 2019 |
| | | | | CA | 3022159 | A1 | 26 April 2019 |
| | | | | EP | 3478019 | A1 | 01 May 2019 |
| | | | | US | 2019132862 | A1 | 02 May 2019 |
| | | | | CA | 3024549 | A1 | 16 May 2019 |
| | | | | US | 2019289513 | A1 | 19 September 2019 |
| | | | | US | 2021219196 | A1 | 15 July 2021 |
| | | | | US | 2022217762 | A1 | 07 July 2022 |

Form PCT/ISA/210 (patent family annex) (July 2022)